(19) Europäisches Patentamt
European Patent Office
Office européen des brevets

(11) **EP 2 166 526 A2**

(12) **DEMANDE DE BREVET EUROPEEN**

(43) Date de publication:
**24.03.2010 Bulletin 2010/12**

(51) Int Cl.:
***G09B 9/00*** *(2006.01)*     *G09B 9/12* *(2006.01)*

(21) Numéro de dépôt: **09169093.3**

(22) Date de dépôt: **31.08.2009**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA RS**

(30) Priorité: **12.09.2008 FR 0805020**

(71) Demandeur: **Thales**
**92200 Neuilly Sur Seine (FR)**

(72) Inventeurs:
• **Morali, Nathan**
  **13007 Marseille (FR)**
• **Couvet, Serge**
  **95280 Jouy le Moutier (FR)**

(74) Mandataire: **Lucas, Laurent Jacques et al**
**Marks & Clerk France**
**Conseils en Propriété Industrielle**
**Immeuble " Visium "**
**22, avenue Aristide Briand**
**94117 Arcueil Cedex (FR)**

(54) **Génération de commandes pour une plate-forme mobile de simulateur**

(57) La présente invention concerne un procédé de génération de commandes de mouvements d'une plate-forme mobile pour un simulateur de véhicule.

Le procédé 20 selon l'invention utilise en entrée des accélérations calculées par un logiciel de simulation de comportement du véhicule. Le procédé selon l'invention comporte au moins les étapes suivantes :

• un premier calcul 22 de commandes d'accélérations à appliquer par la plate-forme en filtrant les accélérations calculées à l'aide d'un filtre construit d'après un modèle mathématique de perception humaine d'un mouvement ;

• un deuxième calcul 23 de positions successives de la plate-forme en fonction des commandes d'accélération filtrées ;

• une mise à l'échelle 24 des positions de la plate-forme en fonction de limitations physiques de la plate-forme ;

• un troisième calcul 25 des commandes d'accélérations à appliquer par la plate-forme, en fonction des positions successives de la plate-forme mises à l'échelle.

FIG.2

EP 2 166 526 A2

**Description**

La présente invention concerne un procédé et un dispositif de génération de commandes de mouvements d'une plate-forme mobile pour un simulateur de véhicule.

Les entraînements des pilotes de véhicules comme des avions, camions, hélicoptères, s'effectuent la plupart du temps grâce à des simulateurs reproduisant des comportements du véhicule. L'objectif d'un simulateur est notamment de reproduire un environnement virtuel représentant un milieu réel d'évolution du véhicule ainsi que le poste de commande du véhicule. Le simulateur comporte donc généralement un poste de pilotage placé au centre d'un dispositif audiovisuel permettant de reproduire un environnement extérieur. Ce type de simulateur, dit simulateur sans mouvement, ne reproduit pas les mouvements du véhicule. Les simulateurs sans mouvements procurent, au pilote les utilisant, des sensations de lenteur. Ces sensations de lenteur sont liées à une inertie du véhicule simulé qui semble être moins réactif qu'un véhicule réel. La sensation de lenteur est particulièrement préjudiciable lorsqu'il s'agit d'entraîner les pilotes à réagir rapidement face à une situation dangereuse. Par exemple, un suivi d'une trajectoire avec un simulateur sans mouvements nécessite des corrections de faible fréquence, avec une grande amplitude, ce qui est peu réaliste. De plus, des entraînements de longue durée peuvent induire des états nauséeux pour les conducteurs.

Afin de pallier les inconvénients précités, la plupart des simulateurs de véhicules utilisent des plates-formes mobiles de simulation pour reproduire des attitudes et des accélérations du véhicule simulé. Les plates-formes mobiles permettent de reproduire de manière plus réaliste des sensations ressenties par un conducteur d'un véhicule en situation réelle. Les performances des conducteurs, ainsi entraînés, s'en trouvent accrues par rapport une utilisation d'un simulateur sans mouvement.

Les plates-formes mobiles peuvent avoir jusqu'à six degrés de liberté, dont trois degrés en rotation et trois degrés en translation. Ces degrés de liberté permettent de reproduire des mouvements de tangage, roulis, lacet, cavalement, embardé, pilonnement, selon le véhicule simulé. Une cinématique usuelle de plate-forme mobile est celle de la plate-forme de Stewart, mettant en oeuvre six vérins hydrauliques ou électriques afin de mettre en mouvement une cabine de pilotage d'un véhicule. Ce type de plate-forme avec mouvement ne peut restituer que de manière imparfaite les sensations ressenties par le conducteur. En effet, des contraintes physiques, liées à une élongation maximale des vérins, limite le champ des perceptions possibles pour le conducteur. Par exemple, une valeur typique d'élongation maximale pour des vérins utilisés dans des simulateurs d'aéronefs est de un mètre et demi. Cette élongation maximale ne permet pas de simuler des accélérations de longue durée par exemple. Cependant, le cerveau humain étant particulièrement sensible à la variation de l'accélération, c'est à dire à la dérivée troisième de la position, des effets physiologiques plus satisfaisant peuvent être obtenus avec des longueurs de vérins limitées, en utilisant par exemple des artifices. Certains artifices permettent notamment de restituer des effets de longue durée. Par exemple, un cabrage de cabine, réalisé avec une vitesse angulaire inférieure à un seuil de la perception humaine, donne une impression d'accélération linéaire prolongée par l'effet du poids du corps sur le dossier du siège du pilote.

Les plates-formes mobiles sont commandées par des algorithmes de contrôle prenant en compte les limitations physiques de la plate-forme. Les algorithmes de contrôle de plate-forme de simulation permettent de générer des commandes à appliquer par la plate-forme afin de réaliser un mouvement de la cabine de pilotage suivant des instructions provenant d'un logiciel de simulation. Les algorithmes de contrôle ont peu évolué pendant les trente dernières années, notamment, l'algorithme utilisé pour produire une commande pour la plate-forme comporte généralement les étapes suivantes :

- une première étape au cours de laquelle des accélérations provenant d'un véhicule simulé sont divisées par deux, puis utilisées comme entrée pour le calcul de la commande ;
- les accélérations peuvent ensuite être transformées en facteurs de charge, au cours d'une deuxième étape, ou encore peuvent passer par un filtre dont les coefficients sont optimisés empiriquement puis multipliés par un gain.

Le résultat de ces opérations est une accélération fournie à la plate-forme mobile sous la forme d'une commande. La commande se comporte comme un filtre dont les coefficients sont déterminés de manière empirique. Outre de restituer à un facteur d'échelle près les accélérations du véhicule réel au niveau de la tête du pilote, l'objectif de la commande est aussi de ramener la plate-forme dans une position neutre. Le calcul des facteurs de charge et le filtrage servent à optimiser la sensation produite par les mouvements de la plate-forme. Le gain permet de réduire l'amplitude des mouvements de la plate-forme de façon à éviter de conduire les vérins dans des butées mécaniques. Conduire les vérins dans les butées a notamment pour conséquence une usure prématurée des vérins, qui sont particulièrement coûteux à remplacer. Les algorithmes existants permettent de borner les valeurs des commandes à prendre en compte par la plate-forme afin de réduire l'amplitude du mouvement de la plate-forme. Les commandes du mouvement de la plate-forme conduisent à restituer de manière insatisfaisante les sensations. De plus, pour garantir que la plate-forme ne butera pas, des marges de sécurité sont prises en compte dans le calcul de la commande. Les marges de sécurité restreignent le domaine d'utilisation en fonction des possibilités mécaniques du système notamment en terme de longueur de vérins utilisable et donc en terme de ressenti de l'accélération par le pilote.

Une amélioration possible peut consister à définir des bornes d'utilisation de la plate-forme en fonction du domaine d'utilisation du véhicule réel comme le domaine de vol pour un aéronef. Globalement, les performances induites par l'utilisation de cette amélioration ne sont pas satisfaisantes en matière de restitution de sensations ainsi qu'en terme de respect des contraintes mécaniques de la plate-forme.

Un but de l'invention est notamment de pallier les inconvénients précités. A cet effet, l'invention a pour objet un procédé de calcul de commandes de mouvements d'une plate forme mobile d'un simulateur de véhicule. Le procédé utilise notamment en entrée des accélérations calculées par un logiciel de simulation de comportement du véhicule. Le procédé comporte notamment les étapes suivantes :

- un premier calcul de commandes d'accélérations à appliquer par la plate-forme, filtrant les accélérations calculées à l'aide d'un filtre construit d'après un modèle mathématique de perception humaine d'un mouvement ;
- un deuxième calcul de positions successives de la plate-forme en fonction des commandes d'accélération filtrées ;
- une mise à l'échelle des positions de la plate-forme en fonction de limitations physiques de la plate-forme ;
- un troisième calcul des commandes d'accélérations à appliquer par la plate-forme, en fonction des positions successives de la plate-forme mises à l'échelle.

Les positions de la plate-forme peuvent être définies par les positions du centre géométrique de la plate-forme et par les longueurs des vérins actionnant la plate-forme.

La longueur des vérins peut être mise à l'échelle par une première fonction de mise à l'échelle *scaling*($l$), par exemple telle que :

*scaling* :

$$\mathbf{R}^{+} \rightarrow \left[ l_{\min}, l_{\max} \right]$$

Avec :

$$scaling\left(l\right) = \begin{cases} \geq l_{\min}, \forall l \leq l_{\min} \\ = l \quad , \forall l \in \left[l_{\min}, l_{\max}\right] \\ \leq l_{\max}, \forall l \geq l_{\max} \\ \left(\dfrac{dscaling}{dl}\right)_{\substack{l=l_{\min} \\ l=l_{\max}}} = 0 \end{cases}$$

où

- $l$ représente une longueur d'un vérin;
- $l_{\min}$ représente une longueur minimale physiquement possible à mettre en oeuvre par la plate-forme ;
- $l_{\max}$ représente une longueur maximale physiquement possible à mettre en oeuvre par la plate-forme.

La mise à l'échelle des positions peut prendre en compte des limitations de vitesse d'allongement des vérins de la plate-forme.

La prise en compte des limitations de vitesse d'allongement des vérins peut utiliser une deuxième fonction de mise à l'échelle *scaling*$_v$($v$), par exemple telle que :

*scaling*$_v$ :

$$\mathbf{R} \rightarrow \left[ v_{\min}, v_{\max} \right]$$

avec :

$$scaling_v(v) = \begin{cases} \geq v_{\min}, \forall v \leq v_{\min} \\ = v \quad , \forall v \in [v_{\min}, v_{\max}] \\ \leq v_{\max}, \forall v \geq v_{\max} \\ \left(\dfrac{dscaling_v}{dv}\right)_{\substack{v=v_{\min} \\ v=v_{\max}}} = 0 \end{cases}$$

où

- $v$ représente une vitesse d'allongement d'un vérin ;
- $v_{\min}$ représente une vitesse minimale d'allongement physiquement atteignable par les vérins de la plate-forme ;
- $v_{\max}$ représente une vitesse maximale d'allongement physiquement possible par les vérins de la plate-forme.

Les accélérations fournies par le logiciel de simulation peuvent être comparées à une valeur seuil en deçà de laquelle les accélérations ne sont plus perçues par un être humain. Seules les accélérations supérieures à la valeur seuil donnent par exemple une commande à appliquer par la plate-forme mobile.

Le troisième calcul des commandes d'accélérations peut appliquer de manière itérative un algorithme de Newton.

La présente invention a également pour objet un dispositif de calcul de commandes de mouvements d'une plate-forme mobile pour un simulateur de véhicule. Le dispositif selon l'invention comporte notamment :

- un premier bloc de calcul de commandes d'accélération à appliquer par la plate-forme, en filtrant des accélérations fournies par un logiciel de simulation de comportement du véhicule, à l'aide d'un filtre construit d'après un modèle mathématique de perception humaine d'un mouvement ;
- un deuxième bloc de calcul de commandes à appliquer par la plate-forme en fonction de limitations physiques de la plate-forme.

Le deuxième bloc peut comporter :

- un premier module de calcul de positions successives de la plate-formes en fonction des accélérations de commandes à appliquer par la plate-forme ;
- un deuxième module de mise à l'échelle des positions calculées en fonction des limitations physiques de la plate-forme ;
- un troisième module calculant des accélérations à appliquer par la plate-forme en fonction des positions mises à l'échelle.

Les positions de la plate-forme peuvent être définies par des positions du centre géométrique de la plate-forme et par des longueurs des vérins de la plate-forme.

La longueur des vérins peut être mise à l'échelle par une première fonction de mise à l'échelle *scaling(l)*, par exemple telle que :

*scaling :*

$$\mathbf{R}^+ \rightarrow [l_{\min}, l_{\max}]$$

Avec :

$$scaling\left(l\right) = \begin{cases} \geq l_{\min}, \forall l \leq l_{\min} \\ = l \quad , \forall l \in \left[l_{\min}, l_{\max}\right] \\ \leq l_{\max}, \forall l \geq l_{\max} \\ \left(\dfrac{dscaling}{dl}\right)_{\substack{l=l_{\min} \\ l=l_{\max}}} = 0 \end{cases}$$

où

- $l$ représente une longueur d'un vérin;
- $l_{\min}$ représente une longueur minimale physiquement possible à mettre en oeuvre par la plate-forme ;
- $l_{\max}$ représente une longueur maximale physiquement possible à mettre en oeuvre par la plate-forme.

La mise à l'échelle des positions peut prendre en compte des limitations de vitesse d'allongement des vérins de la plate-forme.

La prise en compte des limitations de vitesse d'allongement des vérins peut utiliser une deuxième fonction de mise à l'échelle $scaling_v(v)$ par exemple telle que :

$scaling_v$ :

$$\mathbf{R} \rightarrow \left[v_{\min}, v_{\max}\right]$$

avec :

$$scaling_v\left(v\right) = \begin{cases} \geq v_{\min}, \forall v \leq v_{\min} \\ = v \quad , \forall v \in \left[v_{\min}, v_{\max}\right] \\ \leq v_{\max}, \forall v \geq v_{\max} \\ \left(\dfrac{dscaling_v}{dv}\right)_{\substack{v=v_{\min} \\ v=v_{\max}}} = 0 \end{cases}$$

où

- $v$ représente une vitesse d'allongement d'un vérin ;
- $v_{\min}$ représente une vitesse minimale d'allongement physiquement atteignable par les vérins de la plate-forme ;
- $v_{\max}$ représente une vitesse maximale d'allongement physiquement possible par les vérins de la plate-forme.

L'invention a notamment pour principaux avantages d'être simple et peu coûteuse à mettre en oeuvre, d'être adaptable à de multiples plate-formes mobiles de simulation.

D'autres caractéristiques et avantages de l'invention apparaîtront à l'aide de la description qui suit, donnée à titre illustratif et non limitatif, et faite en regard des dessins annexés qui représentent :

- la figure 1 : un exemple de synoptique de différentes étapes de commande d'une plate-forme de simulation selon l'art antérieur ;
- la figure 2 : un synoptique de différentes étapes possibles de calcul d'une commande pour une plate-forme de simulation selon l'invention ;
- la figure 3 : un schéma de différents blocs de calcul de la commande de la plate-forme de simulation selon l'invention ;
- la figure 4 : un synoptique de différentes étapes possibles d'obtention d'un filtre pour le calcul d'une commande d'accélération ;
- la figure 5a : un synoptique de différentes étapes de calcul possibles d'une cinématique directe des vérins de la plate-forme de simulation mobile ;
- la figure 5b : une représentation schématique d'une palette mobile d'une plate-forme de Stewart ;
- la figure 5c : une représentation schématique d'une palette fixe d'une plate-forme de Stewart ;
- la figure 6a : une première fonction de mise à l'échelle de la commande d'accélération ;
- la figure 6b : une deuxième fonction de mise à l'échelle de la commande d'accélération ;
- la figure 7 : un synoptique de différentes étapes de calcul possibles pour définir des paramètres de cinématique inverse afin de produire la commande d'accélération.

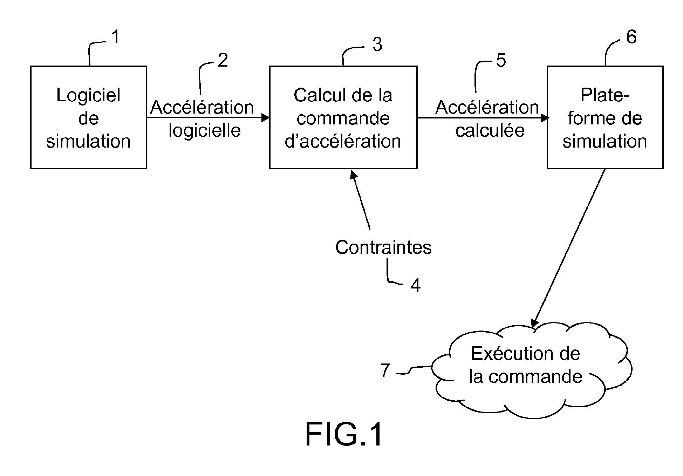

La figure 1 représente un synoptique de différentes étapes de commande d'une plate-forme mobile de simulation d'un véhicule, selon l'art antérieur.

Un entraînement à la conduite d'un véhicule utilise notamment un logiciel de simulation 1 permettant de reproduire virtuellement les mouvements du véhicule ainsi que l'évolution de l'environnement du véhicule au cours des mouvements. Le logiciel de simulation 1 permet par exemple de prendre en compte des commandes d'un pilote du véhicule afin de faire évoluer le véhicule simulé en conséquence, tout en reproduisant le comportement réel du véhicule en pareil cas. Le logiciel de simulation 1 calcule une accélération logicielle 2 caractéristique du mouvement réel du véhicule. Ensuite un premier module 3 calcule une commande d'accélération à appliquer à la plate-forme en prenant en compte de contraintes mécaniques 4 de la plate-forme. La commande d'accélération ainsi calculée se présente sous la forme d'une accélération calculée 5, fournie à la plate-forme de simulation 6, qui l'applique afin d'exécuter la commande d'accélération 7.

La commande d'accélération 7 peut être calculée en divisant l'accélération d'entrée par un facteur afin de garantir le respect des contraintes physiques de la plate-forme de simulation.

Ce type de calcul de commande d'accélération selon l'art antérieur ne permet pas d'assurer une représentation réaliste des accélérations ressenties par un pilote d'un véhicule réel. En effet, les accélérations pouvant être mises en oeuvre sont limitées et ne permettent donc pas de reproduire une accélération de longue durée, par exemple. Par ailleurs, le système de plate-forme n'est pas utilisé de manière optimale. En effet, d'importantes zones d'incursion des vérins ne sont jamais sollicitées et ceci afin de préserver l'usure des vérins en évitant de les mener en butée de course. D'autre part, le facteur de division de l'accélération ne prend pas en compte des accélérations très fortes et subites qui peuvent alors endommager le système de plate-forme.

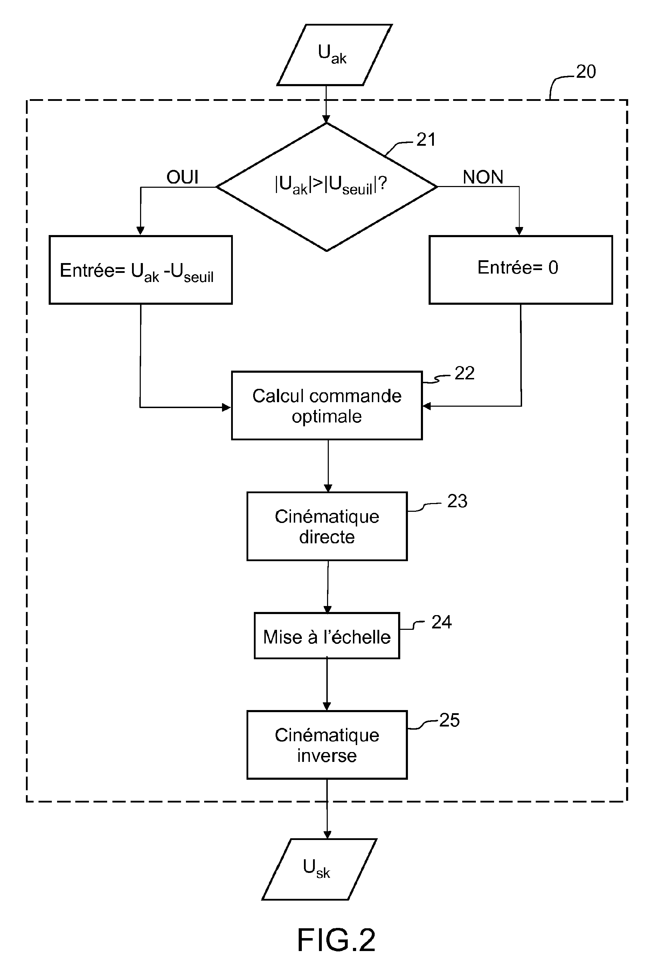

La figure 2 représente un exemple de synoptique de plusieurs étapes possibles 21, 22, 23, 24, 25 pour un calcul d'une commande d'accélération d'un simulateur de véhicule. Une succession des étapes de calcul d'une commande d'accélération forme un procédé de génération de commandes pour une plate-forme mobile de simulateur 20 selon l'invention.

Un logiciel de simulation 1 fournit une ou plusieurs accélérations $U_{ak}$ du véhicule simulé, aussi nommées accélérations logicielles. Au cours d'une première étape 21 de seuillage de l'accélération logicielle $U_{ak}$, le module de l'accélération $U_{ak}$ du véhicule simulé est comparé au module d'une accélération seuil $U_{seuil}$. L'accélération seuil $U_{seuil}$ correspond à une valeur d'accélération en-deça de laquelle l'accélération du véhicule simulé n'est pas perçue par un être humain. Lorsque le module de l'accélération $U_{ak}$ est strictement supérieur au module de l'accélération seuil $U_{seuil}$, l'accélération utilisée en entrée du calcul d'une commande d'accélération est la différence entre l'accélération du véhicule simulé $U_{ak}$ et l'accélération seuil $U_{seuil}$. Lorsque le module de l'accélération $U_{ak}$ est inférieur ou égal au module de l'accélération seuil $U_{seuil}$, alors l'accélération utilisée en entrée du calcul d'une commande d'accélération est nulle. Dans ce cas, aucune commande n'est calculée.

Une deuxième étape 22 du procédé 20 selon l'invention est une étape de calcul d'une commande d'accélération 22, dite commande optimale, en fonction de l'accélération d'entrée, définie au cours de la première étape 21. Le calcul de la commande optimale 22 utilise un modèle mathématique, sous la forme d'une fonction de transfert. Le modèle mathématique représente une perception humaine des attitudes et accélérations du véhicule réel, par l'intermédiaire de différents organes de l'oreille interne. Un tel modèle mathématique de sensations peut utiliser le modèle développé par R. Telban et F. Cardullo pour appliquer une méthode dite de la commande optimale notamment décrite dans la publication suivante : « Motion Cueing Algorithms : A human centered approach, State University of New York at Binghampton, NASA Langley Research Center Hampton, Virginia ». D'autres modèles mathématiques de perception peuvent également être utilisés sans qu'il soit nécessaire de modifier le procédé 20 selon l'invention. La méthode de calcul de la commande optimale utilise un filtre appliqué à l'accélération définie au cours de la première étape 21. Le filtre permet d'obtenir une accélération à imposer à la plate-forme de simulation afin de restituer des sensations proches des accélérations ressenties dans un cas réel.

Une troisième étape 23 du procédé 20 selon l'invention est une étape de calcul de cinématique directe 23. La cinématique directe permet de passer d'une accélération de commande calculée, la commande optimale calculée au cours de la deuxième étape 22, aux positions de vérins qui animent la plate-forme mobile. Le calcul de cinématique permet de déterminer les données cinématiques suivantes :

- positions du centroïde de la plate-forme mobile ;
- longueurs des vérins ;
- vitesses d'allongement des vérins, telles qu'elles seraient si l'on appliquait directement la commande optimale d'accélération issue de la deuxième étape 22.

De manière générale, dans un système de forces parallèles ayant des points d'application fixes, le point par lequel leur résultante passe constamment, quelle que soit la direction de ces forces, est nommé centroïde du système. Dans la présente invention, le système est une plate-forme mobile, le centroïde est alors le centre de gravité de la plate-forme mobile.

Une quatrième étape 24 du procédé 20 selon l'invention est une étape de mise à l'échelle 24 des longueurs calculées au cours de l'étape de cinématique directe 23. L'étape de mise à l'échelle 24 permet d'assurer un respect des contraintes physiques de la plate-forme mobile. Les longueurs des vérins doivent, en effet, rester comprises entre une longueur minimale et une longueur maximale, réalisables par la plate-forme mobile. La mise à l'échelle des longueurs vérins peut être réalisée en utilisant par exemple une fonction de mise à l'échelle : $scaling(l)$ telle que :

$scaling$ :

$$\mathbf{R}^+ \rightarrow \left[ l_{\min}, l_{\max} \right]$$

Avec :

$$scaling(l) = \begin{cases} \geq l_{\min}, \forall l \leq l_{\min} \\ = l \quad, \forall l \in \left[ l_{\min}, l_{\max} \right] \\ \leq l_{\max}, \forall l \geq l_{\max} \\ \left( \dfrac{dscaling}{dl} \right)_{\substack{l=l_{\min} \\ l=l_{\max}}} = 0 \end{cases} \qquad (1000)$$

- $l$ représente une longueur d'un vérin calculée au cours de l'étape de cinématique directe 23 ;
- $l_{\min}$ représente une longueur minimale physiquement possible à mettre en oeuvre par la plate-forme ;
- $l_{\max}$ représente une longueur maximale physiquement possible à mettre en oeuvre par la plate-forme ;
- la condition $\left( \dfrac{dscaling}{dl} \right)_{\substack{l=l_{\min} \\ l=l_{\max}}}$ correspond à une condition applicable sur les dérivées de la fonction $scaling(l)$ permettant d'éviter des discontinuités dans les vitesses de déplacement de la plate-forme.

En effet, des discontinuités dans les vitesses de déplacement de la plate-forme mobile conduisent à des impulsions au niveau des accélérations qui nuisent au ressenti des sensations par le pilote du véhicule simulé. Eviter des discontinuités de vitesse permet donc d'améliorer le ressenti du mouvement par le pilote du véhicule simulé.

Le respect des contraintes physiques de la plate-forme mobile nécessite également de contraindre les vitesses de déplacement de la plate-forme. Les vitesses de déplacement de la plate-forme correspondent aux vitesses d'application des longueurs des vérins calculées au cours de l'étape de cinématique directe 23. Les vitesses de déplacement de la plate-forme peuvent être contraintes en utilisant une fonction de mise à l'échelle des vitesses prenant en paramètre la vitesse de déplacement de la plate-forme mobile :

$scaling_v$ :

$$\mathbf{R} \to \left[ v_{\min}, v_{\max} \right]$$

avec :

$$scaling_v(v) = \begin{cases} \geq v_{\min}, \forall v \leq v_{\min} \\ = v \quad , \forall v \in \left[ v_{\min}, v_{\max} \right] \\ \leq v_{\max}, \forall v \geq v_{\max} \\ \left( \dfrac{dscaling_v}{dv} \right)_{\substack{v=v_{\min} \\ v=v_{\max}}} = 0 \end{cases} \tag{1002}$$

où

- $v$ représente une vitesse d'allongement d'un vérin calculée au cours de l'étape de cinématique directe 23 ;
- $v_{\min}$ représente une vitesse minimale d'allongement physiquement atteignable pour les vérins de la plate-forme mobile ;
- $v_{\max}$ représente une vitesse maximale d'allongement physiquement possible pour les vérins de la plate-forme mobile.

- la condition $\left( \dfrac{dscaling_v}{dv} \right)_{\substack{v=v_{\min} \\ v=v_{\max}}} = 0$ correspond à une condition applicable sur les dérivées de la fonction

  $scaling_v(v)$ permettant d'éviter des discontinuités des accélérations dans le déplacement de la plate-forme mobile, permettant également d'améliorer le ressenti du mouvement.

Les longueurs et vitesses d'allongement mises à l'échelle sont alors compatibles avec les limites mécaniques de la plate-forme mobile. L'étape de mise à l'échelle 24 permet donc avantageusement d'introduire, dans le procédé selon l'invention de calcul de la commande optimale, une simulation de la cinématique de la plate-forme afin d'éviter des situations dans lesquelles les vérins arriveraient en bout de course. Ceci permet avantageusement de préserver la durée de vie des vérins et donc du système de plate-forme mobile. Eviter des situations où les vérins se trouvent en bout de course permet, avantageusement, d'éviter des sensations parasites irréalistes provoquées par des chocs des vérins sur des élastomères amortissant les fins de course des vérins.

Une cinquième étape 25 est une étape de calcul de cinématique inverse 25 qui permet, en utilisant un algorithme de Newton de manière itérative, de repasser des longueurs de vérins, calculées au cours de l'étape de mise à l'échelle 24, à la position du centroïde de la plate-forme mobile, puis aux accélérations de commande $U_{sk}$ nécessaires au déplacement de la plate-forme mobile. Les accélérations de commande $U_{sk}$ permettent alors un déplacement de la plate-forme avec des longueurs de vérins corrigées en fonction des performances de la plate-forme.

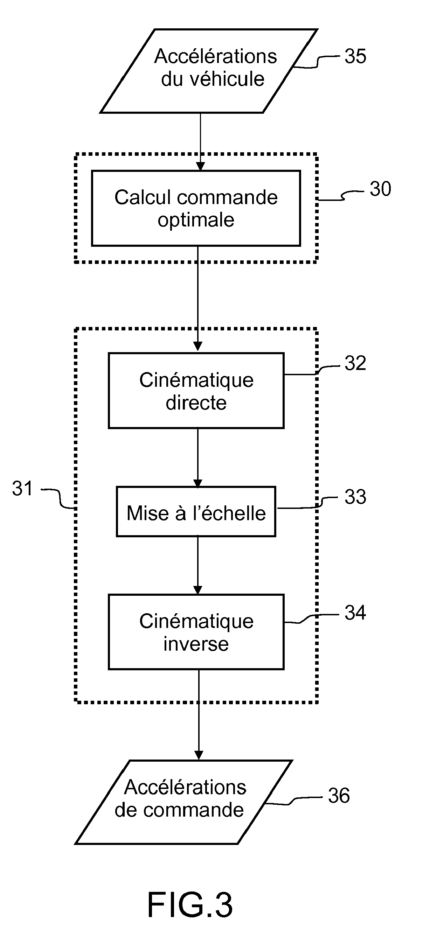

La figure 3 représente un exemple d'une architecture fonctionnelle définissant différents blocs 30, 31 pour la mise en oeuvre du procédé de génération de commandes d'accélération 20 selon l'invention. Les différents blocs fonctionnels 30, 31 peuvent être des parties d'un programme s'exécutant sur un ou plusieurs processeurs d'un ordinateur.

Un premier bloc fonctionnel 30 peut être un bloc qui assure le calcul de la commande optimale en fonction des accélérations d'un véhicule 35 telles que les accélérations logicielles $U_{ak}$. Le calcul de la commande optimale 30 comporte notamment les première et deuxième étapes 21, 22 du procédé selon l'invention.

Un deuxième bloc fonctionnel 31 comporte différents modules de traitements 32, 33, 34, assurant que la commande optimale calculée par le premier bloc fonctionnel 30 respecte les contraintes physiques de la plate-forme. Le deuxième bloc fonctionnel 31 comporte notamment :

- un premier module de calcul de cinématique directe 32, mettant en oeuvre l'étape de calcul de cinématique directe 23 du procédé 20 selon l'invention ;
- un deuxième module de mise à l'échelle 33, réalisant l'étape de mise à l'échelle 24 des longueurs calculées au cours de l'étape de calcul de cinématique directe 23 du procédé 20 selon l'invention ;

- un troisième module de calcule de cinématique inverse 34, mettant en oeuvre l'étape de calcul de la cinématique inverse 25 du procédé 20 selon l'invention.

Le deuxième bloc fonctionnel 31 fournit des accélérations de commande 36 à la plate-forme mobile.

Les modules de cinématique directe 32 et de cinématique inverse 34 dépendent uniquement de la géométrie de la plate-forme mobile. Les modules de cinématique directe 32 et de cinématique inverse 34 sont donc adaptables à n'importe quel type de simulateur avec mouvement sans qu'il soit nécessaire de modifier l'architecture fonctionnelle du programme mettant en oeuvre le procédé 20 selon l'invention.

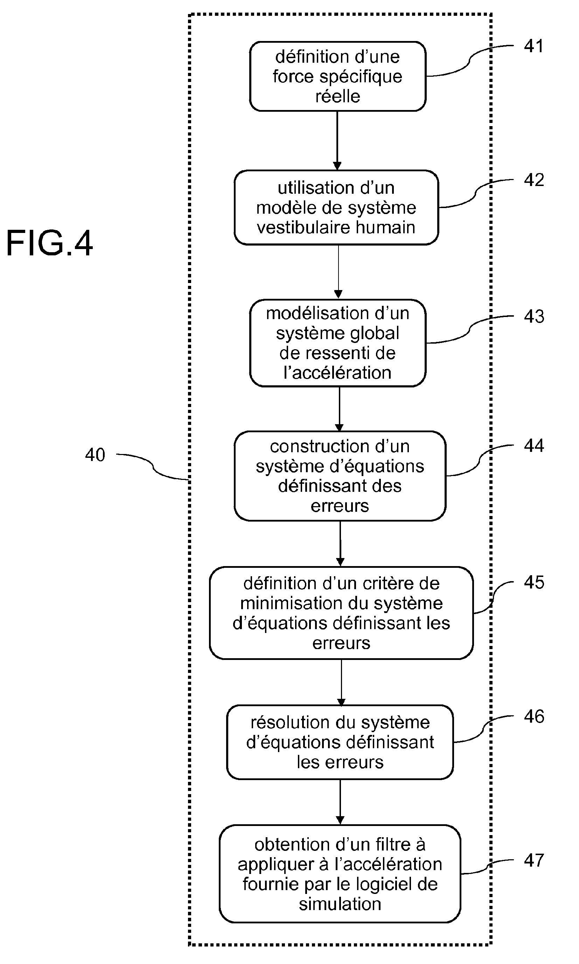

La figure 4 représente différentes étapes possibles 40 pour obtenir un filtre applicable pour le calcul de la commande optimal 22 représenté sur la figure 2.

Le filtre de calcul de la commande optimale peut notamment être déterminé de la manière suivante :

- définition 41 d'une force spécifique réelle appliquée au pilote du véhicule simulé en fonction de l'accélération $U_{ak}$ fournie par le logiciel de simulation 1 du véhicule ;
- utilisation 42 de modèles d'un système vestibulaire humain pour définir les rapports d'une part entre la force spécifique ressentie par le pilote et la force spécifique réelle appliquée au pilote, et d'autre part entre la vitesse angulaire ressentie par le pilote et la vitesse angulaire réelle appliquée au pilote ;
- modélisation 43 d'un système global de ressenti de l'accélération par le pilote du véhicule en fonction du modèle de système vestibulaire ;
- construction 44 d'un système d'équations définissant :

  o une erreur de sensation du pilote du simulateur par rapport au ressenti d'un pilote d'un véhicule réel ;
  o une erreur entre l'état d'un véhicule réel et l'état du véhicule simulé ;

- définition 45 d'un critère de minimisation du système d'équations définissant les erreurs ;
- résolution 46 du système d'équations définissant les erreurs, en fonction du critère de minimisation défini ;
- obtention 47 d'un filtre à appliquer à l'accélération $U_{ak}$ fournie par le logiciel de simulation 1 pour obtenir la commande optimale sous la forme d'une accélération à appliquer par la plate-forme mobile.

L'application du filtre permet de minimiser les erreurs sur le ressenti de l'accélération par le pilote du véhicule simulé.

L'être humain de manière générale est sensible, lorsqu'il est soumis à une accélération, à une force dite force spécifique $\vec{f}_{PS}$. La force spécifique $\vec{f}_{PS}$ peut être définie pour le pilote du véhicule simulé en prenant la tête du pilote comme point d'application de la force spécifique $\vec{f}_{PS}$. La force spécifique peut être définie par la formule suivante :

$$\vec{f}_{PS} = \vec{a}_{PS} - \vec{g} \quad (1003)$$

où $\vec{a}_{PS}$ désigne l'accélération au niveau de la tête du pilote, et $\vec{g}$ représente la force gravitationnelle. L'accélération $\vec{a}_{PS}$ peut s'exprimer de la manière suivante :

$$\vec{a}_{PS} = \vec{a}_S + \ddot{\vec{R}} + 2.\vec{\omega}_S \wedge \dot{\vec{R}} + \dot{\vec{\omega}}_S \wedge \vec{R} + \vec{\omega}_S \wedge (\vec{\omega}_S \wedge \vec{R}) \qquad (1004)$$

en prenant :

- $\vec{a}_S$ : accélération appliquée à la plate-forme mobile du simulateur ;
- $\vec{\omega}_S$ : la vitesse angulaire de la plate-forme ;
- $\vec{R}$ : le vecteur entre le centre de gravité de la plate-forme et le centre de gravité du pilote.

Dans l'expression (1004), on peut considérer que :

- $\vec{\omega}_S \wedge (\vec{\omega}_S \wedge \vec{R})$ est négligeable ;

- $\vec{\omega}_S \wedge \vec{R}$ et $\vec{R}$ sont nuls car la distance entre la tête du pilote et le centre de gravité du simulateur est considérée comme fixe.

En posant $\dot{\vec{\omega}}_S = \begin{pmatrix} \dot{\varphi} \\ \dot{\theta} \\ \dot{\psi} \end{pmatrix}$ et $\vec{R} = \begin{pmatrix} R_X \\ R_Y \\ R_Z \end{pmatrix}$, on obtient :

$$\dot{\vec{\omega}}_S \wedge \vec{R} = \begin{pmatrix} R_Z \cdot \ddot{\theta} - R_Y \cdot \ddot{\psi} \\ R_X \cdot \ddot{\psi} - R_Z \cdot \ddot{\varphi} \\ R_Y \cdot \ddot{\varphi} - R_X \cdot \ddot{\theta} \end{pmatrix} \quad (1005)$$

Et donc :

$$\vec{a}_{PS} = \begin{pmatrix} a_X + R_Z \cdot \ddot{\theta} - R_Y \cdot \ddot{\psi} \\ a_Y + R_X \cdot \ddot{\psi} - R_Z \cdot \ddot{\varphi} \\ a_Z + R_Y \cdot \ddot{\varphi} - R_X \cdot \ddot{\theta} \end{pmatrix} \quad (1006)$$

$\vec{g}$ peut ensuite être exprimée dans le repère du simulateur en utilisant une matrice de passage $T_{mob\text{-}fix}$ entre le repère relatif terrestre et le repère mobile du simulateur :

$$T_{mob-fix} = \begin{pmatrix} \cos\theta \cdot \cos\psi & \cos\theta \cdot \sin\psi & -\sin\theta \\ \sin\varphi \cdot \sin\theta \cdot \cos\psi - \cos\varphi \cdot \sin\psi & \sin\varphi \cdot \sin\theta \cdot \sin\psi + \cos\varphi \cdot \cos\psi & \sin\varphi \cdot \cos\theta \\ \cos\varphi \cdot \sin\theta \cdot \cos\psi + \sin\varphi \cdot \sin\psi & \cos\varphi \cdot \sin\theta \cdot \sin\psi - \sin\varphi \cdot \cos\psi & \cos\varphi \cdot \cos\theta \end{pmatrix}$$

$$(1007)$$

On obtient alors :

$$\left[ T_{mob-fix} \right] \cdot \begin{pmatrix} 0 \\ 0 \\ g \end{pmatrix} = \begin{pmatrix} -g \cdot \sin\theta \\ g \cdot \sin\varphi \cdot \cos\theta \\ g \cdot \cos\varphi \cdot \cos\theta \end{pmatrix} \quad (1008)$$

La force spécifique peut donc s'exprimer ainsi :

$$\vec{f}_{PS} = \vec{a}_{PS} - \vec{g} = \begin{pmatrix} a_X + R_Z \cdot \ddot{\theta} - R_Y \cdot \ddot{\psi} + g \cdot \sin\theta \\ a_Y + R_X \cdot \ddot{\psi} - R_Z \cdot \ddot{\varphi} - g \cdot \sin\varphi \cdot \cos\theta \\ a_Z + R_Y \cdot \ddot{\varphi} - R_X \cdot \ddot{\theta} - g \cdot \cos\varphi \cdot \cos\theta \end{pmatrix} \quad (1009)$$

Parmi les systèmes à disposition d'un être humain pour assurer son équilibre et sa mobilité se trouve le système vestibulaire. Le système vestibulaire est un des systèmes sensoriels principaux pour la perception d'un mouvement et d'une orientation par rapport à la verticale. Des récepteurs sensoriels du système vestibulaire sont situés dans l'oreille interne. Le système vestibulaire permet notamment d'évaluer une vitesse de déplacement à partir d'une accélération mesurée au niveau de l'oreille interne d'un être humain. En effet, l'oreille interne se comporte comme un instrument de mesures :

- d'accélérations angulaires, par l'intermédiaire de canaux semi-circulaires ;
- d'accélérations linéaires, par l'intermédiaire d'otolithes.

Une modélisation du système vestibulaire permet de représenter des sensations ressenties par un pilote auquel on applique une accélération, en fonction de l'accélération appliquée. Par exemple, on peut utiliser des modèles décrits par R. Telban, W. Wu, F. Cardullo dans « Motion Cueing Algorithm Development : Initial investigation and redesign of the algorithms. State university of New York at Binghampton, NASA/CR-2000-209863, Mars 2005".

Un modèle de canaux semi-circulaires peut notamment être décrit par la relation suivante :

$$\frac{\hat{\underline{\omega}}}{\underline{\omega}} = H_{SSC}(s) = \frac{\tau_L \tau_a s^2}{(1+\tau_a s)(1+\tau_S s)(1+\tau_L s)} \qquad (1010)$$

et un modèle d'otolithes peut être décrit par la relation :

$$\frac{\hat{\underline{f}}}{\underline{f}} = H_{OTO}(s) = \frac{K(1+\tau_a s)}{(1+\tau_L s)(1+\tau_S s)} \qquad (1011)$$

avec :

- $\hat{\underline{\omega}}$ : une vitesse angulaire ressentie ;
- $\underline{\omega}$ : une vitesse angulaire « réelle » ;
- $\hat{\underline{f}}$ : une force spécifique ressentie ;
- $\underline{f}$ : force spécifique « réelle » ;
- $\tau_S$, $\tau_L$, $\tau_a$, $K$ : des constantes de temps dépendant d'un degré de liberté mis en jeu et correspondant aux temps de réaction du système vestibulaire.

A partir des modèles du système vestibulaire (1010), (1011), on peut construire un modèle global de ressenti de l'accélération par un pilote du véhicule simulé mis en mouvement par la plate-forme mobile.

Plusieurs modèles de ressenti peuvent être construits, le modèle décrit ci-dessous est donné à titre d'exemple.

Dans un premier temps, on peut considérer un modèle global de ressenti en deux dimensions, une dimension étant selon un premier axe horizontal x et une autre dimension étant selon un deuxième axe horizontal y par exemple. L'accélération $U_{ak}$ calculée par le logiciel de simulation peut s'exprimer ainsi :

$$U_{ak} = \underline{u} = \begin{pmatrix} u_1 \\ u_2 \end{pmatrix} = \begin{pmatrix} \dot{\omega}_y \\ a_x \end{pmatrix} = \begin{pmatrix} \ddot{\theta} \\ a_x \end{pmatrix} \qquad (1012)$$

En deux dimensions, le modèle des otolithes (1011) devient par exemple :

$$\frac{\hat{\underline{f}}}{\underline{f}} = H_{OTO}(p) = G_0 \cdot \frac{p + A_0}{(p + B_0)(p + B_1)} \qquad (1013)$$

avec $f_x = a_x + R_z.\ddot{\theta} + g \sin(\theta) = f$ (1014), où $G_0$, $A_0$, $B_0$, $B_1$ sont des constantes.

En considérant que : $\sin(\theta) = \theta$ l'expression (1013) devient :

$$\hat{f} = G_0 \cdot \frac{p + A_0}{(p + B_0)(p + B1)} \cdot \left[ (R_z + g \cdot \frac{1}{p^2}) \cdot u_1 + u_2 \right] \qquad (1014)$$

L'expression (1014) peut ensuite être mise sous la forme suivante :

$$\left\{ \begin{array}{l} \hat{f} = \hat{f}_1 + \hat{f}_2 \\ \hat{f}_1 = \dfrac{G_0 \cdot R_Z \cdot p^3 + G_0 \cdot A_0 \cdot R_Z \cdot p^2 + G_0 \cdot g \cdot p + G_0 \cdot A_0 \cdot g}{p^4 + (B_0 + B_1) \cdot p^3 + B_0 \cdot B_1 \cdot p^2} \cdot u_1 \quad (1015) \\ \hat{f}_2 = \dfrac{G_0 \cdot p + G_0 \cdot A_0}{p^2 + (B_0 + B_1) \cdot p + B_0 \cdot B_1} \cdot u_2 \end{array} \right.$$

Afin d'obtenir une représentation d'état de $\hat{f}_1$, posons :

$$\left. \begin{array}{c} x = \begin{pmatrix} x_1 \\ x_2 \\ x_3 \\ x_4 \end{pmatrix}; \ \dot{x} = \begin{pmatrix} \dot{x}_1 \\ \dot{x}_2 \\ \dot{x}_3 \\ \dot{x}_4 \end{pmatrix}; \\[3em] A_{OTO\_1} = \begin{bmatrix} A & B & 0 & 0 \\ C & 0 & 0 & 0 \\ 0 & D & 0 & 0 \\ 0 & 0 & E & 0 \end{bmatrix}; \ B_{OTO\_1} = \begin{bmatrix} F \\ 0 \\ 0 \\ 0 \end{bmatrix}; \\[2em] C_{OTO\_1} = \begin{bmatrix} 1 & 1 & 1 & 1 \end{bmatrix}; \ D_{OTO\_1} = \begin{bmatrix} 0 \end{bmatrix}; \end{array} \right\} \quad (1016)$$

et cherchons *A, B, C, D, E, F* tels que :

$$\left\{ \begin{array}{l} \dot{x} = A_{OTO\_1} \cdot x + B_{OTO\_1} \cdot u \quad (1017) \\ \hat{f}_1 = C_{OTO\_1} \cdot x + D_{OTO\_1} \cdot u \quad (1018) \end{array} \right.$$

L'expression (1018) devient :

$$\hat{f}_1 = x_1 + x_2 + x_3 + x_4 \quad (1019)$$

et l'expression (1017) devient :

$$\begin{cases} p \cdot x_1 = A \cdot x_1 + B \cdot x_2 + F \cdot u_1 \\ p \cdot x_2 = C \cdot x_1 \\ p \cdot x_3 = D \cdot x_2 \\ p \cdot x_4 = E \cdot x_3 \end{cases} \qquad (1020)$$

La résolution du système (118) donne :

$$x_1 = \frac{F \cdot p}{p^2 - A \cdot p + B \cdot C} \cdot u_1 \quad (1021)$$

$$x_2 = \frac{C \cdot F}{p^2 - A \cdot p + B \cdot C} \cdot u_1 \quad (1022)$$

$$x_3 = \frac{D \cdot C \cdot F}{p \cdot \left(p^2 - A \cdot p + B \cdot C\right)} \cdot u_1 \quad (1023)$$

$$x_4 = \frac{E \cdot D \cdot C \cdot F}{p^2 \cdot \left(p^2 - A \cdot p + B \cdot C\right)} \cdot u_1 \quad (1024)$$

Ensuite, l'expression (1019) donne :

$$\left. \begin{aligned} \hat{f}_1 &= \frac{G_0 \cdot R_Z \cdot p^3 + G_0 \cdot A_0 \cdot R_Z \cdot p^2 + G_0 \cdot g \cdot p + G_0 \cdot A_0 \cdot g}{p^4 + \left(B_0 + B_1\right) \cdot p^3 + B_0 \cdot B_1 \cdot p^2} \cdot u_1 \\ &= \frac{F \cdot p^3 + C \cdot F \cdot p^2 + D \cdot C \cdot F \cdot p + E \cdot D \cdot C \cdot F}{p^4 + A \cdot p^3 + B \cdot C \cdot p^2} \cdot u_1 \end{aligned} \right\} \quad (1025')$$

$$(1025') \Rightarrow \begin{cases} A = -\left(B_0 + B_1\right) \\ B = -\dfrac{B_0 \cdot B_1}{A_0} \\ C = A_0 \\ D = \dfrac{g}{A_0 \cdot R_Z} \\ E = A_0 \\ F = G_0 \cdot R_Z \end{cases} \qquad (1025)$$

D'où :

$$A_{OTO\_1} = \begin{bmatrix} -(B_0 + B_1) & -\dfrac{B_0 \cdot B_1}{A_0} & 0 & 0 \\ A_0 & 0 & 0 & 0 \\ 0 & \dfrac{g}{A_0 \cdot R_Z} & 0 & 0 \\ 0 & 0 & A_0 & 0 \end{bmatrix};$$

$$B_{OTO\_1} = \begin{bmatrix} G_0 \cdot R_Z \\ 0 \\ 0 \\ 0 \end{bmatrix};$$

$$C_{OTO\_1} = \begin{bmatrix} 1 & 1 & 1 & 1 \end{bmatrix};$$

$$D_{OTO\_1} = \begin{bmatrix} 0 \end{bmatrix}$$

$$\left.\right\} \quad (1026)$$

Pour obtenir une représentation d'état de $\hat{f}_2$, posons :

$$x = \begin{pmatrix} x_1 \\ x_2 \end{pmatrix}; \ \dot{x} = \begin{pmatrix} \dot{x}_1 \\ \dot{x}_2 \end{pmatrix}; \ u = u_2;$$

$$A_{OTO\_2} = \begin{bmatrix} A & B \\ C & D \end{bmatrix}; \ B_{OTO\_2} = \begin{bmatrix} E \\ F \end{bmatrix}; \ C_{OTO\_2} = \begin{bmatrix} 0 & 1 \end{bmatrix}; \ D_{OTO\_2} = \begin{bmatrix} 0 \end{bmatrix}$$

$$\left.\right\} (1027)$$

et cherchons A, *B,* C, *D, E, F* tels que :

$$\begin{cases} \dot{x} = A_{OTO\_2} \cdot x + B_{OTO\_2} \cdot u & (1028) \\ \hat{f}_1 = C_{OTO\_2} \cdot x + D_{OTO\_2} \cdot u & (1029) \end{cases}$$

L'expression (129) donne alors : $\hat{f}_2 = x_2$ (1030) et l'expression (1028) donne :

$$\begin{cases} p \cdot x_1 = A \cdot x_1 + B \cdot x_2 + E \cdot u_2 \\ p \cdot x_2 = C \cdot x_1 + D \cdot x_2 + F \cdot u_2 \end{cases} \quad (1031)$$

En résolvant le système d'équations (1031), on obtient :

$$\left. \begin{aligned} \hat{f}_2 &= \frac{G_0 \cdot p + G_0 \cdot A_0}{p^2 + (B_0 + B_1) \cdot p + B_0 \cdot B_1} \cdot u_2 \\ &= \frac{F \cdot p + C \cdot E - A \cdot F}{p^2 - (A+D) \cdot p + D \cdot A - C \cdot B} \cdot u_2 \end{aligned} \right\} \Rightarrow \begin{cases} F = G_0 \\ C \cdot E - A \cdot F = G_0 \cdot A_0 \\ A + D = -(B_0 + B_1) \\ D \cdot A - C \cdot B = B_0 \cdot B_1 \end{cases} \quad (1032)$$

En fixant arbitrairement deux paramètres, on obtient :

$$
\begin{cases}
A = 1\,(impos\acute{e}) \\
B = -(B_0 + B_1 + 1) - B_0 \cdot B_1 \\
C = 1\,(impos\acute{e}) \\
D = -(B_0 + B_1 + 1) \\
E = G_0 \cdot (A_0 + 1) \\
F = G_0
\end{cases}
\Leftrightarrow
\begin{cases}
A_{OTO\_2} = \begin{bmatrix} 1 & -(B_0 + B_1 + 1) - B_0 \cdot B_1 \\ 1 & -(B_0 + B_1 + 1) \end{bmatrix} \\[2mm]
B_{OTO\_2} = \begin{bmatrix} G_0 \cdot (A_0 + 1) \\ G_0 \end{bmatrix} \\[2mm]
C_{OTO\_2} = \begin{bmatrix} 0 & 1 \end{bmatrix} \\[2mm]
D_{OTO\_2} = \begin{bmatrix} 0 \end{bmatrix}
\end{cases}
\qquad (1033)
$$

Enfin, la représentation d'état de $\hat{f}$ se déduit de l'expression $\hat{f} = \hat{f}_1 + \hat{f}_2$. Les matrices relatives à $\hat{f}$ sont :

$$
A_{OTO} = \begin{bmatrix} A_{OTO\_1} & 0 \\ 0 & A_{OTO\_2} \end{bmatrix}
$$

$$
B_{OTO} = \begin{bmatrix} B_{OTO\_1} & 0 \\ 0 & B_{OTO\_2} \end{bmatrix} \quad (1034),
$$

$$
C_{OTO} = \begin{bmatrix} C_{OTO\_1} & C_{OTO\_2} \end{bmatrix}
$$

$$
D_{OTO} = \begin{bmatrix} D_{OTO\_1} & D_{OTO\_2} \end{bmatrix}
$$

avec :

$$A_{OTO} = \begin{bmatrix} -(B_0+B_1) & -\dfrac{B_0 \cdot B_1}{A_0} & 0 & 0 & 0 & 0 \\ A_0 & 0 & 0 & 0 & 0 & 0 \\ 0 & \dfrac{g}{A_0 \cdot R_Z} & 0 & 0 & 0 & 0 \\ 0 & 0 & A_0 & 0 & 0 & 0 \\ 0 & 0 & 0 & 0 & 1 & -(B_0+B_1+1)-B_0 \cdot B_1 \\ 0 & 0 & 0 & 0 & 1 & -(B_0+B_1+1) \end{bmatrix};$$

$$B_{OTO} = \begin{bmatrix} R_Z \cdot G_0 & 0 \\ 0 & 0 \\ 0 & 0 \\ 0 & 0 \\ 0 & G_0 \cdot (A_0+1) \\ 0 & G_0 \end{bmatrix};$$

$$C_{OTO} = \begin{bmatrix} 1 & 1 & 1 & 1 & 0 & 1 \end{bmatrix};$$

$$D_{OTO} = \begin{bmatrix} 0 & 0 \end{bmatrix}$$

$$(1035)$$

L'ensemble de matrices (1035) est une des représentations d'état possibles pour le modèle des canaux semi-circulaires. D'autres représentations peuvent être utilisées notamment en modifiant les valeurs des paramètres fixés de manière arbitraire.

En deux dimensions, le modèle des canaux semi-circulaires (1010) devient par exemple :

$$\hat{\omega} = \frac{p^2 . \tau_L . \tau_A}{(1+\tau_L.p)(1+\tau_S.p)(1+\tau_A.p)} \, \omega \quad (1036)$$

Sachant que $\underline{u} = \begin{pmatrix} u_1 \\ u_2 \end{pmatrix} = \begin{pmatrix} \dot{\omega}_y \\ a_x \end{pmatrix} = \begin{pmatrix} \ddot{\theta} \\ a_x \end{pmatrix}$ $(1012)$ et que $\dot{\omega}_y = p \cdot \omega_y$ (1037) alors l'expression (1036) devient :

$$\hat{\omega} = \frac{p . \tau_L . \tau_A}{(1+\tau_L.p)(1+\tau_S.p)(1+\tau_A.p)} \, u_1 \quad (1038)$$

On cherche ensuite à exprimer l'expression (1038) de la manière suivante :

$$\begin{cases} \underline{\dot{x}} = A_{SCC} \cdot \underline{x} + B_{SCC} \cdot \underline{u} \\ \hat{\omega} = C_{SCC} \cdot \underline{x} + D_{SCC} \cdot \underline{u} \end{cases} \qquad (1039)$$

En développant l'expression (1038), on obtient l'expression suivante :

$$\hat{\omega} = \frac{p \cdot \tau_L \cdot \tau_A}{p^3 \cdot \tau_L \cdot \tau_A \cdot \tau_S + p^2 \cdot (\tau_L \cdot \tau_A + \tau_L \cdot \tau_S + \tau_A \cdot \tau_S) + p \cdot (\tau_A + \tau_L + \tau_S) + 1} \cdot u_1 \qquad (1040)$$

Ensuite, on pose :

$$\left. \begin{matrix} x = \begin{pmatrix} x_1 \\ x_2 \\ x_3 \end{pmatrix} ; \ \dot{x} = \begin{pmatrix} \dot{x}_1 \\ \dot{x}_2 \\ \dot{x}_3 \end{pmatrix} ; \ u = \begin{pmatrix} u_1 \\ u_2 \end{pmatrix} ; \\[2em] A_{SCC} = \begin{bmatrix} A & B & C \\ D & 0 & 0 \\ 0 & E & 0 \end{bmatrix} ; \ B_{SCC} = \begin{bmatrix} F & 0 \\ 0 & 0 \\ 0 & 0 \end{bmatrix} ; \ C_{SCC} = \begin{bmatrix} 0 & 1 & 0 \end{bmatrix} ; \ D_{SCC} = \begin{bmatrix} 0 & 0 \end{bmatrix} \end{matrix} \right\} \ (1041)$$

et on cherche *A, B, C, D, E, F* tels que :

$$\begin{cases} \dot{x} = A_{SCC} \cdot x + B_{SCC} \cdot u & (142) \\ \hat{\omega} = C_{SCC} \cdot x + D_{SCC} \cdot u & (143) \end{cases}$$

L'équation (1043) donne : $\hat{\omega} = x_2$ (1044) et l'équation (1042) donne :

$$\begin{cases} p \cdot x_1 = A \cdot x_1 + B \cdot x_2 + C.x_3 + F \cdot u_1 \\ p \cdot x_2 = D \cdot x_1 \\ p \cdot x_3 = E \cdot x_2 \end{cases} \qquad (1044)$$

En résolvant le système (1044), on obtient :

$$\hat{\omega} = \frac{p \cdot \tau_L \cdot \tau_A}{p^3 \cdot \tau_L \cdot \tau_A \cdot \tau_S + p^2 \cdot (\tau_L \cdot \tau_A + \tau_L \cdot \tau_S + \tau_A \cdot \tau_S) + p \cdot (\tau_A + \tau_L + \tau_S) + 1} \cdot u_1$$

$$= \frac{D \cdot F \cdot p}{p^3 - A \cdot p^2 - D \cdot B \cdot p - D \cdot C \cdot E} \cdot u_2 \qquad (1045)$$

$$= \frac{-\dfrac{F}{C \cdot E} \cdot p}{-\dfrac{1}{D \cdot C \cdot E} p^3 + \dfrac{A}{D \cdot C \cdot E} \cdot p^2 + \dfrac{B}{C \cdot E} \cdot p + 1} \cdot u_2$$

puis :

$$(1045) \Rightarrow \begin{cases} -\dfrac{F}{C \cdot E} = \tau_L \cdot \tau_A \\[2mm] -\dfrac{1}{D \cdot C \cdot E} = \tau_L \cdot \tau_A \cdot \tau_S \\[2mm] \dfrac{A}{D \cdot C \cdot E} = \tau_L \cdot \tau_A + \tau_L \cdot \tau_S + \tau_A \cdot \tau_S \\[2mm] \dfrac{B}{C \cdot E} = \tau_A + \tau_L + \tau_S \end{cases} \qquad (1046)$$

On fixe ensuite arbitrairement deux des variables *A, B, C, D, E, F* pour résoudre le système (1046), on obtient alors, par exemple :

$$\begin{cases} A = -\dfrac{\tau_L \cdot \tau_A + \tau_L \cdot \tau_S + \tau_A \cdot \tau_S}{\tau_L \cdot \tau_A \cdot \tau_S} \\[3mm] B = -\dfrac{(\tau_A + \tau_L + \tau_S)}{\tau_L \cdot \tau_A} \\[3mm] C = -\dfrac{1}{\tau_L \cdot \tau_A} \\[3mm] D = \dfrac{1}{\tau_S} \\[3mm] E = 1 \\[1mm] F = 1 \end{cases} \qquad (1047)$$

puis :

$$A_{CSS} = \begin{bmatrix} -\dfrac{\tau_L \cdot \tau_A + \tau_L \cdot \tau_S + \tau_A \cdot \tau_S}{\tau_L \cdot \tau_A \cdot \tau_S} & -\dfrac{(\tau_A + \tau_L + \tau_S)}{\tau_L \cdot \tau_A} & -\dfrac{1}{\tau_L \cdot \tau_A} \\ \dfrac{1}{\tau_S} & 0 & 0 \\ 0 & 1 & 0 \end{bmatrix}$$

$$B_{CSS} = \begin{bmatrix} 1 & 0 \\ 0 & 0 \\ 0 & 0 \end{bmatrix} \qquad\qquad (1048)$$

$$C_{CSS} = \begin{bmatrix} 0 & 1 & 0 \end{bmatrix}$$

$$D_{CSS} = \begin{bmatrix} 0 \end{bmatrix}$$

L'ensemble de matrice (1048) est une des représentations d'état possibles pour le modèle des canaux semi-circulaires. D'autres représentations peuvent être obtenues en modifiant les valeurs des paramètres attribuées de manière arbitraire.

En regroupant les représentations d'état des modèles de canaux semi-circulaires et otolithes, on obtient par exemple :

$$A_V = \begin{pmatrix} A_{SCC} & 0 \\ 0 & A_{OTO} \end{pmatrix} \; ; \; B_V = \begin{pmatrix} B_{SCC} \\ B_{OTO} \end{pmatrix} \; ; \; C_V = \begin{pmatrix} C_{SCC} & 0 \\ 0 & C_{OTO} \end{pmatrix} \; ; \; D_V = \begin{pmatrix} D_{SCC} \\ D_{OTO} \end{pmatrix} \; (1049)$$

Une représentation du système global rassemblant le ressenti des accélérations linéaires et angulaires par le pilote peut se présenter ainsi :

$$\begin{cases} \dot{\underline{x}} = A_V \cdot \underline{x} + B_V \cdot \underline{u} \\ \hat{\underline{y}} = C_V \cdot \underline{x} + D_V \cdot \underline{u} \end{cases} \text{ avec } \; \hat{\underline{y}} = \begin{pmatrix} \hat{\omega}_{ressenti} \\ \hat{f}_{ressenti} \end{pmatrix} \; (1050)$$

Une fois la représentation du système global déterminée, la commande optimale est déterminée en choisissant et en minimisant un critère contraignant :

- une erreur $e$ de sensation du pilote du véhicule simulé par rapport aux sensations d'un pilote de véhicule réel ;
- une erreur $\underline{x}_e$ sur le déplacement de la plate-forme mobile.

Dans un premier temps, on construit donc deux erreurs à minimiser :

$$\begin{cases} \underline{x}_e = x_A - x_S \\ e = y_A - y_S \end{cases} \; (1051)$$

La représentation du système global de ressenti (1050) devient alors :

$$\begin{cases} \underline{\dot{x}}_e = \underline{\dot{x}}_A - \underline{\dot{x}}_S = A_V \cdot \underline{x}_A + B_V \cdot \underline{u}_A - \left( A_V \cdot \underline{x}_S + B_V \cdot \underline{u}_S \right) \\ \underline{e} = C_V \cdot \underline{x}_A + D_V \cdot \underline{u}_A - C_V \cdot \underline{x}_S - D_V \cdot \underline{u}_S \end{cases}$$
$$\Leftrightarrow \begin{cases} \underline{\dot{x}}_e = A_V \cdot (\underline{x}_A - \underline{x}_S) + B_V \left( \underline{u}_A - \underline{u}_S \right) \\ \underline{e} = C_V \cdot (\underline{x}_A - \underline{x}_S) + D_V \left( \underline{u}_A - \underline{u}_S \right) \end{cases} \tag{1052}$$

puis :

$$\begin{cases} \underline{\dot{x}}_e = A_V \cdot \underline{x}_e + B_V \cdot \left( \underline{u}_A - \underline{u}_S \right) \\ \underline{e} = C_V \cdot \underline{x}_e + D_V \cdot \left( \underline{u}_A - \underline{u}_S \right) \end{cases} \tag{1053}$$

On introduit ensuite un groupe additionnel de termes qui sont la vitesse et la position du centroïde de la plate-forme mobile : $x_d = {}^t(\dot{x}_S\ x_S)$ (1054)
On obtient alors la représentation d'état suivante :

$$\begin{cases} \dot{x}_d = \underbrace{\begin{pmatrix} 0 & 0 \\ 1 & 0 \end{pmatrix}}_{A_d} x_d + \underbrace{\begin{pmatrix} 0 & 1 \\ 0 & 0 \end{pmatrix}}_{B_d} u_S \\ \\ y_d = x_d \end{cases} \tag{1055}$$

En posant $x = \begin{bmatrix} x_e \\ x_d \end{bmatrix}$ **et** $y = \begin{bmatrix} e \\ y_d \end{bmatrix}$ et en utilisant le système (1055), on obtient :

$$\begin{cases} \dot{x} = \begin{pmatrix} A_v & 0 \\ 0 & A_d \end{pmatrix} x + \begin{pmatrix} B_v \\ 0 \end{pmatrix} u_a + \begin{pmatrix} -B_v \\ B_d \end{pmatrix} u_s \\ \\ y = \begin{pmatrix} C_v & 0 \\ 0 & I \end{pmatrix} x \end{cases} \tag{1056}$$

et :

$$\begin{cases} \dot{x} = A \cdot x + B \cdot u_S + D \cdot u_A \\ y = C \cdot x \end{cases} \tag{1057}$$

avec

$$A = \begin{pmatrix} A_v & 0 \\ 0 & A_d \end{pmatrix}, D = \begin{pmatrix} B_v \\ 0 \end{pmatrix}, B = \begin{pmatrix} -B_v \\ B_d \end{pmatrix}, C = \begin{pmatrix} C_v & 0 \\ 0 & I \end{pmatrix}$$

Les systèmes d'équations (1056), (1057) définissent donc une représentation d'état du système à résoudre pour minimiser les erreurs (1051).

On peut alors définir un critère de minimisation pouvant, par exemple, s'exprimer de la façon suivante :

$$J = E\left\{\int_{t0}^{t1}\left({}^t\underline{e}\cdot Q_d\cdot\underline{e} + {}^t\underline{x}_d\cdot R_d\cdot\underline{x}_d + {}^t\underline{u}_s\cdot R\cdot\underline{u}_s\right)dt\right\} \quad (1058)$$

où $Q_d$ et $R_d$ sont des matrices semi-définies positives et $R$ une matrice définie positive.

Le comportement du véhicule réel étant inconnu et sachant que pour appliquer la méthode de la commande d'accélération optimale il est nécessaire de connaître une trajectoire du système dans l'espace d'état, on suppose que la consigne de déplacement du véhicule réel est constante entre deux instants d'échantillonnage de la trajectoire du système.

Le critère de minimisation (1058) peut alors s'écrire sous la forme suivante :

$$J = \frac{1}{2}\left\{\int_{t0}^{t1}\left({}^t\underline{x}_d\cdot R_d\cdot\underline{x}_d + {}^t\underline{u}_S\cdot R\underline{u}_S\right)dt\right\} + \frac{1}{2}\left\{\int_{t0}^{t1}{}^t\underline{e}\cdot Q_d\cdot\underline{e}\,dt\right\} \quad (1059)$$

L'expression (1059) du critère de minimisation comporte :

- un premier terme $({}^t\underline{x}_d\cdot R_d\cdot\underline{x}_d + {}^t\underline{u}_S\cdot R\cdot\underline{u}_S)$ correspondant à une minimisation de l'erreur sur le déplacement ;
- un deuxième terme $\underline{e}\cdot Q_d\cdot\underline{e}$ correspondant à une minimisation de l'erreur de sensation.

Le critère défini par l'expression (1059) représente donc un compromis entre la minimisation des deux erreurs décrites par l'expression (1051).

En regroupant les matrices $Q_d$ et $R_d$ en une seule matrice Q :

$$Q = \begin{pmatrix} Q_d & 0 \\ 0 & R_d \end{pmatrix} \quad (1060)$$

l'expression du critère de minimisation (1059) devient :

$$J = \frac{1}{2}\left\{\int_{t_0}^{t_1}\left({}^t\underline{y}\cdot Q\cdot\underline{y} + {}^tu_s\cdot R\cdot u_s\right)dt\right\} \quad (1061)$$

avec la matrice $Q$ définie non négative et la matrice $R$ définie positive. Si l'on choisit $t_1$ assez grand, ce qui correspond à un horizon infini, alors l'expression (1061) du critère de minimisation devient :

$$J = \frac{1}{2}\left\{\int_0^\infty\left({}^t\underline{y}\cdot Q\underline{y} + {}^t\underline{u}_S\cdot R\cdot\underline{u}_S\right)dt\right\} \quad (1062)$$

Pour résoudre le système, on utilise la méthode de la commande optimale qui revient à maximiser un Hamiltonien du système défini par :

$$H = -\frac{1}{2}[{}^ty\cdot Q\cdot y + {}^tu_S\cdot R\cdot u_S] + {}^t\lambda(A\cdot x + D\cdot u_A + B\cdot u_S) \quad (1063)$$

Les équations canoniques de Hamilton sont les suivantes :

$$\left|\begin{array}{l} \dfrac{d\dot{x}}{dt} = H_\lambda \\[2mm] \dfrac{d\lambda}{dt} = -H_x \end{array}\right. \text{(1064), avec} \left|\begin{array}{l} x_{t=0} = 0 \\[1mm] \lambda_{t=T} = 0 \end{array}\right. \text{(1065)}$$

La deuxième équation canonique de Hamilton $\dfrac{d\lambda}{dt} = -H_x$ donne :

$$\dot{\lambda} = {}^{t}C \cdot Q \cdot C \cdot x - {}^{t}A \cdot \lambda \ \text{(1066)}$$

et la maximisation du Hamiltonien donne : $u_S = R^{-1} \cdot {}^{t}B \cdot \lambda$ (1067). L'expression (1067) représente la commande optimale. On peut alors définir un système liant $x$ et $\lambda$ de la manière suivante :

$$\begin{cases} \dot{x} = A \cdot x + B \cdot R^{-1} \cdot {}^{t}B \cdot \lambda + D \cdot u_A \\[2mm] \dot{\lambda} = {}^{t}C \cdot Q \cdot C \cdot x - {}^{t}A \cdot \lambda \end{cases} \ \text{(1068)}$$

On se trouve dans un cas de problème de poursuite car $e = y_A - y_S$ est quelconque. On peut donc poser: $\lambda(t) = K(t).x(t) + k(t)$ (1069). En considérant que $e(t)$ est constante car $u_A$ est constante, on peut alors considérer que lorsque $T$ est très grand, $K$ et $k$ sont des constantes, d'où :

$$\lambda = K.x + k \ \text{(1070)}$$

Le système (1068) devient alors :

$$\begin{cases} \dot{x} = A \cdot x + B \cdot R^{-1} \cdot {}^{t}B \cdot (K \cdot x + k) + D \cdot u_A \\[2mm] K \cdot \dot{x} = {}^{t}C \cdot Q \cdot C \cdot x - {}^{t}A \cdot (K \cdot x + k) \end{cases} \ \text{(1071)}$$

En remplaçant $\dot{x}$ par sa valeur, on obtient alors :

$$(K \cdot A + {}^{t}A \cdot K + K \cdot B \cdot R^{-1} \cdot {}^{t}B \cdot K - {}^{t}C \cdot Q \cdot C) \cdot x = -(K \cdot B \cdot R^{-1} \cdot {}^{t}B \cdot k + K \cdot D \cdot u_A + {}^{t}A \cdot k)$$

$$\text{(1072)} \ ,$$

pour tout $x(t)$, d'où :

$$\begin{cases} K \cdot A + {}^{t}A \cdot K + K \cdot B \cdot R^{-1} \cdot {}^{t}B \cdot K - {}^{t}C \cdot Q \cdot C = 0 \\[2mm] K \cdot B \cdot R^{-1} \cdot {}^{t}B \cdot k + K \cdot D \cdot u_A + {}^{t}A \cdot k = 0 \end{cases} \ \text{(1073)}$$

Donc K est une solution de la première équation du système (1073) : $K \cdot A + {}^{t}A \cdot K + K \cdot B \cdot R^{-1} \cdot {}^{t}B \cdot K - {}^{t}C \cdot Q \cdot C = 0$ dite équation de Ricatti.

$k$ peut donc s'écrire sous la forme suivante :

$$k = -(K \cdot B \cdot R^{-1} \cdot {}^{t}B + {}^{t}A)^{-1} \cdot K \cdot D \cdot u_{A} \quad (1074)$$

Posons:

$$M = -(K \cdot B \cdot R^{-1} \cdot {}^{t}B + {}^{t}A)^{-1} \cdot K \cdot D \quad (1075)$$

On obtient donc $k = M \cdot u_a$ (1075'), la commande optimale est alors donnée par:

$$u_{S} = R^{-1} \cdot {}^{t}B \cdot (K \cdot x + M \cdot u_{A}) \quad (1076)$$

Soit d'après l'expression de $M$ :

$$u_{S} = R^{-1} \cdot {}^{t}B \cdot (K \cdot x + M \cdot u_{A}) \quad (1077)$$

En reportant l'expression de $u_S$ dans l'équation (1071), on obtient une équation différentielle permettant de déterminer une évolution du vecteur d'état $x$ en fonction de la commande d'entrée $u_a$ :

$$\begin{cases} \dot{x} = (A + B \cdot R^{-1} \cdot {}^{t}B \cdot K) \cdot x + (B \cdot R^{-1} \cdot {}^{t}B \cdot M + D) \cdot u_{A} \\ 0 = K \cdot A + {}^{t}A \cdot K + K \cdot B \cdot R^{-1} \cdot {}^{t}B \cdot K - {}^{t}C \cdot Q \cdot C \end{cases} \quad (1078)$$

On en déduit ensuite une expression d'un filtre W(s) à appliquer à la commande d'entrée $u_a$ tel que : $u_S = W_s \times u_a$

$$W(s) = R^{-1} \cdot {}^{t}B.K.[s.I - (A + B.R^{-1} \cdot {}^{t}B.K)]^{-1}.(B.R^{-1} \cdot {}^{t}B.M + D) + R^{-1} \cdot {}^{t}B.M \quad (1079)$$

La commande $u_S$ représente une accélération optimale à fournir à la plate-forme mobile afin d'assurer un déplacement réaliste de la plate-forme minimisant l'erreur de sensation ressentie par le pilote du véhicule simulé par rapport à un pilote d'un véhicule réel.

Il est également possible de considérer un modèle de ressenti en trois dimensions, pour un système de plate-forme mobile ayant six degrés de liberté. Dans ce cas, l'accélération utilisée en entrée peut être représentée de la façon suivante :

$$\underline{u} = \begin{pmatrix} u_1 \\ u_2 \\ u_3 \\ u_4 \\ u_5 \\ u_6 \end{pmatrix} = \begin{pmatrix} \dot{\omega}_x \\ \dot{\omega}_y \\ \dot{\omega}_z \\ a_x \\ a_y \\ a_z \end{pmatrix} = \begin{pmatrix} \ddot{\varphi} \\ \ddot{\theta} \\ \ddot{\psi} \\ \ddot{x} \\ \ddot{y} \\ \ddot{z} \end{pmatrix} \quad (1080)$$

Le modèle des canaux semi-circulaires en trois dimensions est donné par l'expression suivante :

$$\frac{\hat{\overline{\omega}}}{\underline{\omega}} = H_{SSC}(s) = \frac{\tau_L \tau_a s^2}{(1+\tau_a s)(1+\tau_S s)(1+\tau_L s)} \qquad (1010)$$

avec :

- $\underline{\hat{\omega}} = \begin{bmatrix} \dot{\hat{\varphi}} & \dot{\hat{\theta}} & \dot{\hat{\psi}} \end{bmatrix}'$ : une vitesse angulaire ressentie ;

- $\omega = [\dot{\varphi}\ \dot{\theta}\ \dot{\psi}]'$ : une vitesse angulaire réelle.

Le modèle des otolithes en trois dimensions est donné par l'expression suivante :

$$\frac{\hat{f}}{\underline{f}} = H_{OTO}(s) = \frac{K(1+\tau_a s)}{(1+\tau_L s)(1+\tau_S s)} \qquad (1011)$$

- $\underline{\hat{f}} = \begin{bmatrix} \ddot{\hat{x}} & \ddot{\hat{y}} & \ddot{\hat{z}} \end{bmatrix}'$ : une force spécifique ressentie ;

- $\underline{f} = [\ddot{x}\ \ddot{y}\ \ddot{z}]'$ : force spécifique « réelle ».

En considérant les six degrés de liberté, la force spécifique s'écrit dans un repère attaché à la base du simulateur :

$$f_P = \begin{pmatrix} a_X + R_Z \cdot \ddot{\theta} - R_Y \cdot \ddot{\psi} + g \cdot \sin\theta \\ a_Y + R_X \cdot \ddot{\psi} - R_Z \cdot \ddot{\varphi} - g \cdot \sin\varphi \cdot \cos\theta \\ a_Z + R_Y \cdot \ddot{\varphi} - R_X \cdot \ddot{\theta} - g \cdot \cos\varphi \cdot \cos\theta \end{pmatrix} \quad (1081)$$

Dans le cadre d'une approximation des petits angles et en supposant que le pilote est à la verticale du centroïde de la plate-forme mobile, c'est à dire $R_X = R_Y = 0$, la force spécifique s'écrit alors :

$$f_P = \begin{pmatrix} a_X + R_Z \cdot \ddot{\theta} + g \cdot \theta \\ a_Y - R_Z \cdot \ddot{\varphi} - g \cdot \varphi \\ a_Z - g \end{pmatrix} \quad (1082)$$

On peut définir $u_S$ comme une donnée comportant des accélérations au niveau du centroïde de la plate-forme mobile :

$$u_s = \begin{bmatrix} \dot{\omega}_x & \dot{\omega}_y & \dot{\omega}_z & a_x & a_y & a_z \end{bmatrix}' = \begin{bmatrix} u(1)\ u(2)\ u(3)\ u(4)\ u(5)\ u(6) \end{bmatrix}' \quad (1083)$$

On peut ainsi exprimer $f_P$ en fonction de $u_S$ :

$$f_P = \begin{pmatrix} u(4) + (R_Z + \frac{1}{p^2} g).u(2) \\ u(5) - (R_Z + \frac{1}{p^2} g).u(1) \\ u(6) - g \end{pmatrix} \quad (1084)$$

Dans l'expression obtenue (1084) les forces spécifiques $f_P$ sont découplées selon les trois axes. En effet, si on note :

$$f_P = \begin{bmatrix} f_{px} & f_{py} & f_{pz} \end{bmatrix}, u_1 = \begin{bmatrix} \ddot{\theta} \ddot{x} \end{bmatrix}', u_2 = \begin{bmatrix} \ddot{\phi} \ddot{y} \end{bmatrix}', u_3 = \begin{bmatrix} \ddot{\psi} \ddot{z} \end{bmatrix}' \quad (1085)$$

Alors, on a : $f_{Px} = f(u_1)$, $f_{py} = f(u_2)$, $f_{pz} = f(u_3)$. Il est donc possible d'appliquer la méthode de résolution de la commande optimale utilisée dans le cas à deux dimensions pour les forces spécifiques selon les axes x et y. Pour la force spécifique selon l'axe z, il est possible par exemple d'utiliser une simple restitution des accélérations.
On considère un système d'état tel que construit précédemment :

$$\begin{cases} \dot{x} = A \cdot x + B \cdot u_s + D \cdot u_a \\ y = C.x \end{cases} \quad (1086)$$

Il s'agit ensuite de discrétiser le système (1086) afin d'obtenir un filtre sur la commande d'accélération en temps discret. Obtenir un filtre en temps discret permet de prévoir l'instant auquel les limites physiques de la plate-forme vont être atteintes. Le système discrétisé (1086) devient alors :

$$\begin{cases} x_{k+1} = A_1 \cdot x_k + B_1 \cdot u_{sk} + D_1 \cdot u_{ak} \\ y_k = C.x_k \end{cases} \quad (1087)$$

Avec :

- $T_e$ un pas de temps de discrétisation petit ;
- $A_1 = e^{A.Te}$,
- $B_1 = Te.e^{A.T_e}.B$,
- $D_1 = Te.e^{A.T_e}.D$.

Si $k$ est un numéro de pas, le critère à minimiser, devient dans le cas à trois dimensions :

$$J = \frac{1}{2} \sum_{k=0}^{N-1} {}^t x_k C^T \cdot Q \cdot C x_k + {}^t u_{sk} \cdot R \cdot u_{sk} \quad (1088)$$

Le Hamiltonien associé au critère de minimisation (1088) est donné par l'expression :

$$H = -\frac{1}{2} \cdot \sum_{k=0}^{N-1} {}^t x_k \cdot {}^t C \cdot Q \cdot C \cdot x_k + {}^t u_{sk} \cdot R \cdot u_{sk} + \sum_{k=0}^{N-1} {}^t \lambda_{k+1} \cdot (A_1 \cdot x_k + B_1 \cdot u_{sk} + D_1 \cdot u_{ak})$$

$$(1089)$$

Les équations canoniques correspondant à l'expression du Hamiltonien (1089) sont les suivantes :

$$\begin{cases} x_{k+1} = H_{\lambda_{k+1}} \\ \lambda_k = H_{x_k} \end{cases} \quad (1090)$$

La maximisation du Hamiltonien donne donc :

$$-R \cdot u_{sk} + B_1^T \cdot \lambda_{k+1} = 0 \Leftrightarrow u_{sk} = R^{-1} \cdot B_1^T \cdot \lambda_{k+1} \quad (1090)$$

Le système liant $x$ et $\lambda$ est alors :

$$\begin{cases} x_{k+1} = A_1 \cdot x_k + B_1 \cdot R^{-1} \cdot {}^tB_1 \cdot \lambda_{k+1} + D_1 \cdot u_{ak} \\ \lambda_k = -{}^tC \cdot Q \cdot C \cdot x_k + {}^tA_1 \cdot \lambda_{k+1} \end{cases} \quad (1092)$$

Si l'on suppose N grand, dans un cas stationnaire à horizon infini, on a donc :

$$\lambda_k = K \cdot x_k + k \quad \forall k \geq 1 \ (1093)$$

Le système (1092) devient alors :

$$\begin{cases} 0 = ({}^tC \cdot Q \cdot C + K) \cdot x_k - {}^tA_1 \cdot K \cdot x_{k+1} + (I - {}^tA_1) \cdot k \\ x_{k+1} = (I - B_1 \cdot R^{-1} \cdot {}^tB_1 \cdot K)^{-1} \cdot (D_1 \cdot u_{ak} + B_1 \cdot R^{-1} \cdot {}^tB_1 \cdot k + A_1 \cdot x_k) \end{cases} \quad (1094)$$

Par substitution, on obtient l'équation suivante :

$$\left[ \left( {}^tC \cdot Q \cdot C + K \right) - {}^tA_1 \cdot K \cdot \left( I - B_1 \cdot R^{-1} \cdot {}^tB_1 \cdot K \right)^{-1} \cdot A_1 \right] \cdot x_k$$
$$- \left[ {}^tA_1 \cdot K \cdot \left( I - B_1 \cdot R^{-1} \cdot {}^tB_1 \cdot K \right)^{-1} \cdot \left( D_1 \cdot u_{ak} + B_1 \cdot R^{-1} \cdot {}^tB_1 \cdot k \right) - \left( I - {}^tA_1 \right) \cdot k \right] = 0 \quad (1095)$$

L'équation (1095) étant vraie $\forall x_k$, on obtient donc le système (1096) décrit en Annexe.
En utilisant le lemme suivant : $(A\text{-}BCD)^{-1} = A^{-1} + A^{-1}B \cdot (C^{-1} - DA^{-1}B)^{-1} DA^{-1}$ sur la première équation du système (1096), alors celle-ci devient :

$$\left( {}^tC \cdot Q \cdot C + K \right) - {}^tA_1 \cdot K \cdot \left( I - B_1 \cdot R^{-1} \cdot {}^tB_1 \cdot K \right)^{-1} \cdot A_1 = 0 \quad (1097)$$

Puis :

$${}^tC \cdot Q \cdot C + K - {}^tA_1 \cdot K \cdot A_1 - {}^tA_1 \cdot K \cdot B_1 (R - {}^tB_1 \cdot K \cdot B_1)^{-1} \cdot {}^tB_1 \cdot K \cdot A_1 = 0 \quad (1098)$$

L'expression (1098) étant une équation de Ricatti en temps discret.

La deuxième équation du système (1096) devient le système (1099) :

$$k = (I - {}^{t}A_1 - {}^{t}A_1 \cdot K \cdot (I - B_1 \cdot R^{-1} \cdot {}^{t}B_1 \cdot K)^{-1} \cdot B_1 \cdot R^{-1} \cdot {}^{t}B_1)^{-1} \left.\right\}$$
$$\cdot ({}^{t}A_1 \cdot K \cdot (I - B_1 \cdot R^{-1} \cdot {}^{t}B_1 \cdot K)^{-1} \cdot D_1) \cdot u_{ak} \qquad (1099)$$

En posant

$$N_D = I - {}^{t}A_1 - {}^{t}A_1 \cdot K \cdot (I - B_1 \cdot R^{-1} \cdot {}^{t}B_1 \cdot K)^{-1} \cdot B_1 \cdot R^{-1} \cdot {}^{t}B_1)^{-1} \left.\right\}$$
$$\cdot ({}^{t}A_1 \cdot K \cdot (I - B_1 \cdot R^{-1} \cdot {}^{t}B_1 \cdot K)^{-1} \cdot D_1 \qquad (1100)$$

L'expression (1099) peut alors s'exprimer sous la forme suivante :

$$\begin{cases} k = N_D \cdot u_{ak} \\ N_D = I - {}^{t}A_1 - {}^{t}A_1 \cdot K \cdot (I - B_1 \cdot R^{-1} \cdot {}^{t}B_1 \cdot K)^{-1} \cdot B_1 \cdot R^{-1} \cdot {}^{t}B_1)^{-1} \\ \qquad \cdot ({}^{t}A_1 \cdot K \cdot (I - B_1 \cdot R^{-1} \cdot {}^{t}B_1 \cdot K)^{-1} \cdot D_1 \end{cases} \qquad (1101)$$

On obtient donc la relation suivante :

$$\begin{cases} x_{k+1} = A_1 \cdot x_k + B_1 \cdot u_{sk} + D_1 \cdot u_{ak} \\ u_{sk} = R^{-1} \cdot {}^{t}B_1 \cdot (K \cdot x_{k+1} + k) \end{cases} \qquad (1102)$$

avec $K$ vérifiant :

$$\begin{aligned} & {}^{t}C \cdot Q \cdot C + K - {}^{t}A_1 \cdot K \cdot A_1 - {}^{t}A_1 \cdot K \cdot B_1(R - {}^{t}B_1 \cdot K \cdot B_1)^{-1} \cdot {}^{t}B_1 \cdot K \cdot A_1 = 0 \\ & k = N_D \cdot u_{ak} \\ & N_D = I - {}^{t}A_1 - {}^{t}A_1 \cdot K \cdot (I - B_1 \cdot R^{-1} \cdot {}^{t}B_1 \cdot K)^{-1} \cdot B_1 \cdot R^{-1} \cdot {}^{t}B_1)^{-1} \\ & \quad \cdot ({}^{t}A_1 \cdot K \cdot (I - B_1 \cdot R^{-1} \cdot {}^{t}B_1 \cdot K)^{-1} \cdot D_1 \end{aligned} \qquad (1103)$$

On résout alors le système par substitution et on obtient la forme suivante pour la commande optimale :

$$\begin{aligned} x_{k+1} &= \left[ A_1 + B_1 \cdot \left(I - R^{-1} \cdot {}^{t}B_1 \cdot K \cdot B_1\right)^{-1} \cdot R^{-1} \cdot {}^{t}B_1 \cdot K \cdot A_1 \right] \cdot x_k \\ &+ \left[ B_1 \cdot \left(I - R^{-1} \cdot {}^{t}B_1 \cdot K \cdot B_1\right)^{-1} \cdot \left(R^{-1} \cdot {}^{t}B_1 \cdot (K \cdot D_1 + N)\right) + D_1 \right] . u_{ak} \end{aligned} \qquad (1104)$$

Le filtre à appliquer à l'accélération d'entrée peut donc avoir par exemple la forme suivante :

$$\left[ B_1 \cdot \left(I - R^{-1} \cdot {}^{t}B_1 \cdot K \cdot B_1\right)^{-1} \cdot \left(R^{-1} \cdot {}^{t}B_1 \cdot (K \cdot D_1 + N)\right) + D_1 \right] \quad (1105)$$

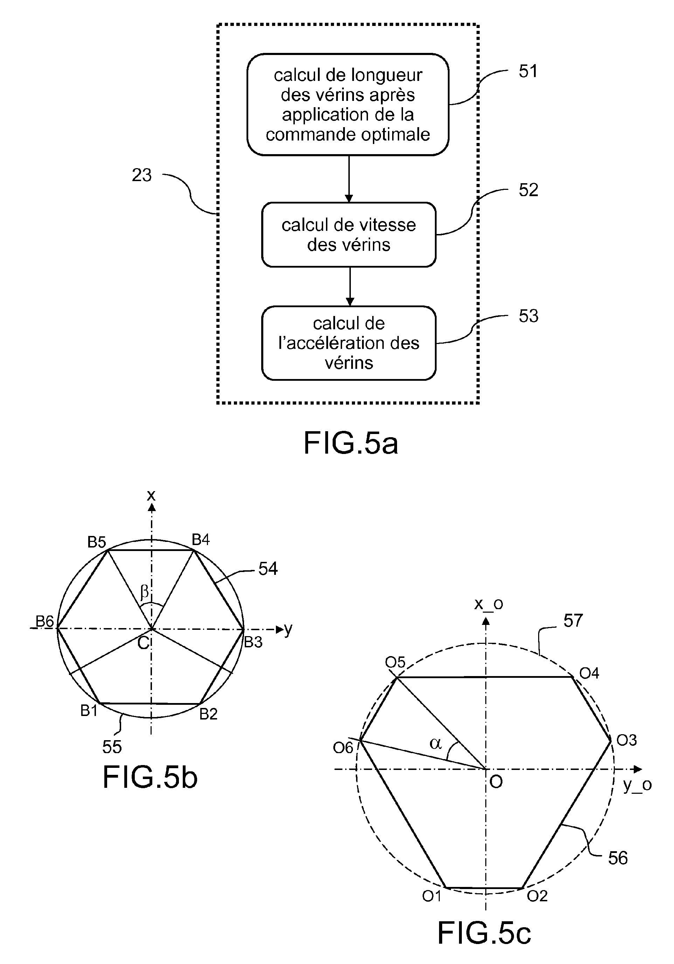

La figure 5a représente plusieurs étapes possibles 51, 52, 53 pour le calcul de cinématique directe 23 représenté sur la figure 2.

Une première étape du calcul de cinématique directe 23 est un calcul de longueur des vérins 51 après application de la commande optimale calculée au cours de la deuxième étape 22 du procédé de génération de commande selon l'invention. Pour calculer la longueur d'extension des vérins nécessaire pour l'application de la commande optimale, il s'agit dans un premier temps de calculer les coordonnées des différents points d'attache des vérins de la plate-forme mobile. Parmi les points d'attache des vérins, des premiers points d'attaches sont situés sur une partie mobile de la plate-forme.

La plate-forme considérée est par exemple une plate-forme de Stewart. Les calculs décrits par la suite sont adaptés pour l'exemple au cas d'une plate-forme de Stewart.

Une partie mobile ou palette mobile 54 de la plate-forme de Stewart peut se représenter, comme sur la figure 5b, par un hexagone dont les six sommets peuvent être notés $B_1$, $B_2$, $B_3$, $B_4$, $B_5$, $B_6$. La palette mobile 54 peut être centrée sur un repère défini par deux axes perpendiculaires, x, y. La palette mobile est définie telle que : $B_4B_5 = B_6B_1 = B_2B_3 = E_1$. Posons :

- C le centre de la palette mobile et du repère x, y ;

- $\beta$ l'angle entre les vecteurs $\overrightarrow{CB_4}$, $\overrightarrow{CB_5}$ ;

- $R_1$ le rayon d'un cercle 55 circonscrit à la palette mobile 55.

Alors

$$\beta = 2 \cdot \arctan\left(\frac{E_1}{2 \cdot \sqrt{(R_1)^2 - (E_1/2)^2}}\right) \quad (1106)$$

et

$$CB_1 = \begin{pmatrix} -R_1 \cos(\pi/3 - \beta/2) \\ -R_1 \sin(\pi/3 - \beta/2) \end{pmatrix}; CB_2 = \begin{pmatrix} -R_1 \cos(\pi/3 - \beta/2) \\ R_1 \sin(\pi/3 - \beta/2) \end{pmatrix}; CB_3 = \begin{pmatrix} -R_1 \cos(\pi/3 + \beta/2) \\ R_1 \sin(\pi/3 + \beta/2) \end{pmatrix};$$

$$CB_4 = \begin{pmatrix} R_1 \cos(\beta/2) \\ R_1 \sin(\beta/2) \end{pmatrix}; CB_5 = \begin{pmatrix} R_1 \cos(\beta/2) \\ -R_1 \sin(\beta/2) \end{pmatrix}; CB_6 = \begin{pmatrix} -R_1 \cos(\pi/3 + \beta/2) \\ -R_1 \sin(\pi/3 + \beta/2) \end{pmatrix}.$$

$$(1107)$$

Une partie fixe ou palette fixe 56 de la plate-forme de Stewart peut se représenter, comme sur la figure 5c, par un hexagone dont les six sommets peuvent être notés $O_1$, $O_2$, $O_3$, $O_4$, $O_5$, $O_6$. La palette fixe 56 peut être centrée sur un repère défini par deux axes perpendiculaires x_o, y_o. La palette mobile est définie telle que : $O_1O_2 = O_3O_4 = O_5B_6 = E_2$. Posons :

- O le centre de la palette fixe et du repère x_o, y_o ;

- $\alpha$ l'angle entre les vecteurs $\overrightarrow{OO_5}$, $\overrightarrow{OO_6}$ ;;

- $R_2$ le rayon d'un cercle 57 circonscrit à la palette fixe 56.

Alors

$$\alpha = 2 \cdot \arctan\left(\frac{E_2}{2 \cdot \sqrt{(R_2)^2 - (E_2/2)^2}}\right) \quad (1108)$$

et

$$OB_1 = \begin{pmatrix} R_2\cos(\alpha/2) \\ -R_2\sin(\alpha/2) \end{pmatrix}; OB_2 = \begin{pmatrix} -R_2\cos(\alpha/2) \\ R_2\sin(\alpha/2) \end{pmatrix}; OB_3 = \begin{pmatrix} R_2\cos(\pi/3+\alpha/2) \\ R_2\sin(\pi/3+\alpha/2) \end{pmatrix};$$

$$OB_4 = \begin{pmatrix} R_2\cos(\pi/3-\alpha/2) \\ R_2\sin(\pi/3-\alpha/2) \end{pmatrix}; OB_5 = \begin{pmatrix} R_2\cos(\pi/3-\alpha/2) \\ -R_2\sin(\pi/3-\alpha/2) \end{pmatrix}; OB_6 = \begin{pmatrix} R_2\cos(\pi/3+\alpha/2) \\ -R_2\sin(\pi/3+\alpha/2) \end{pmatrix}$$

$$(1109)$$

En exprimant les vecteurs $\overrightarrow{O_iB_i}$ , i étant un entier compris entre un et six, dans un repère lié au sol, on déduit :

$$\overrightarrow{O_iB_i} = -\overrightarrow{OO_i} + \overrightarrow{OC} + \overrightarrow{CB_i}$$

$$= \begin{pmatrix} -xO_i \\ -yO_i \\ 0 \end{pmatrix} + \begin{pmatrix} x_C \\ y_C \\ z_C \end{pmatrix} + [T]\cdot\begin{pmatrix} xB_i \\ yB_i \\ 0 \end{pmatrix}$$

$$= \begin{pmatrix} x_C + \cos\theta\cdot\cos\psi\cdot xB_i + \cos\theta\cdot\sin\psi\cdot yB_i - xO_i \\ y_C + (\sin\varphi\cdot\sin\theta\cdot\cos\psi - \cos\varphi\cdot\sin\psi)\cdot xB_i + (\sin\varphi\cdot\sin\theta\cdot\sin\psi + \cos\varphi\cdot\cos\psi)\cdot yB_i - yO_i \\ z_C + (\cos\varphi\cdot\sin\theta\cdot\cos\psi + \sin\varphi\cdot\sin\psi)\cdot xB_i + (\cos\varphi\cdot\sin\theta\cdot\sin\psi - \sin\varphi\cdot\cos\psi)\cdot yB_i - zO_i \end{pmatrix}$$

$$(1110)$$

en rappelant que :

$$\begin{bmatrix} X_S \\ Y_S \\ Z_S \end{bmatrix} = [T]\cdot\begin{bmatrix} X_T \\ Y_T \\ Z_T \end{bmatrix} \qquad (1111),$$

avec :

$$[T] = \begin{bmatrix} \cos\theta\cdot\cos\psi & \sin\varphi\cdot\sin\theta\cdot\cos\psi - \cos\varphi\cdot\sin\psi & \cos\varphi\cdot\sin\theta\cdot\cos\psi - \sin\varphi\cdot\sin\psi \\ \cos\theta\cdot\sin\psi & \sin\varphi\cdot\sin\theta\cdot\sin\psi - \cos\varphi\cdot\cos\psi & \cos\varphi\cdot\sin\theta\cdot\sin\psi - \sin\varphi\cdot\cos\psi \\ -\sin\theta & \sin\varphi\cdot\cos\theta & \cos\varphi\cdot\cos\theta \end{bmatrix}$$

$$(1112)$$

et

$$l_i = \sqrt{\overrightarrow{OB_i}\cdot\overrightarrow{OB_i}} \quad (1113),$$

$l_i$ représentant la longueur d'extension de chaque vérins.

Une deuxième étape du calcul de cinématique directe 23 est un calcul de vitesse des vérins 52, calculée en fonction de la longueur des vérins obtenue au cours de la première étape 51 du calcul de cinématique directe 23. Ona:

$$l_i^2 = \overrightarrow{OB_i} \cdot \overrightarrow{OB_i} \qquad (1114),$$

par dérivation, on obtient :

$$l_i \cdot \frac{dl_i}{dt} = \frac{d\overrightarrow{OB_i}}{dt} \cdot \overrightarrow{OB_i} \qquad (1115)$$

d'où :

$$v_i = \frac{dl_i}{dt}$$
$$= \frac{1}{l_i}\left( \frac{d\overrightarrow{OB_i}}{dt} \cdot \overrightarrow{OB_i} \right) \qquad (1116),$$

avec

$$l_i = \sqrt{\overrightarrow{OB_i} \cdot \overrightarrow{OB_i}} \qquad (1117)$$

et $\overrightarrow{O_iB_i}$ tel que décrit en Annexe 1 par l'expression, (1118) cela implique :

- 
$$\left( \frac{d\overrightarrow{O_iB_i}}{dt} \right)_x = \dot{x}_C + \begin{pmatrix} xB_i & yB_i \end{pmatrix} \cdot \begin{pmatrix} -(\sin\theta \cdot \cos\psi) \cdot \dot\theta - (\cos\theta \cdot \sin\psi) \cdot \dot\psi \\ -(\sin\theta \cdot \sin\psi) \cdot \dot\theta + (\cos\theta \cdot \cos\psi) \cdot \dot\psi \end{pmatrix} (1119)$$

- 
$$\left( \frac{d\overrightarrow{O_iB_i}}{dt} \right)_y = \dot{y}_C + \begin{pmatrix} xB_i & yB_i \end{pmatrix} \cdot \Upsilon_1 \ (1120)$$

  avec $\Upsilon_1$ défini en Annexe 1 par l'expression (1120')

- 
$$\left( \frac{d\overrightarrow{O_iB_i}}{dt} \right)_z = \dot{z}_C + \begin{pmatrix} xB_i & yB_i \end{pmatrix} \cdot \Upsilon_2 \ (1121)$$

  avec $\Upsilon_2$ défini en Annexe 1 par l'expression (1121')

Une troisième étape du calcul de cinématique directe 23 est un calcul de d'accélération des vérins 53, calculée en fonction de la vitesse des vérins obtenue au cours de la deuxième étape 52 du calcul de cinématique directe 23. On a:

$$l_i \cdot \frac{dl_i}{dt} = \frac{d\overrightarrow{OB_i}}{dt} \cdot \overrightarrow{OB_i} \qquad (1122)$$

par dérivation, on obtient :

$$l_i \cdot \frac{d^2 l_i}{dt^2} + \left(\frac{dl_i}{dt}\right)^2 = \left(\frac{d\overrightarrow{OB_i}}{dt}\right)^2 + \frac{d^2\overrightarrow{OB_i}}{dt^2} \cdot \overrightarrow{OB_i} \qquad (1123)$$

d'où :

$$a_i = \frac{d^2 l_i}{dt^2} = \frac{1}{l_i}\left[\left(\frac{d\overrightarrow{OB_i}}{dt}\right)^2 + \frac{d^2\overrightarrow{OB_i}}{dt^2} \cdot \overrightarrow{OB_i} - \left(\frac{dl_i}{dt}\right)^2\right] \qquad (1124)$$

avec :

- 

$$\left(\frac{d^2\overrightarrow{O_iB_i}}{dt^2}\right)_x = \ddot{x}_C + \left(xB_i \quad yB_i\right) \cdot \Upsilon_3 \quad (1125)$$

avec $\Upsilon_3$ défini en Annexe 1 par l'expression (1125')

- 

$$\left(\frac{d^2\overrightarrow{O_iB_i}}{dt^2}\right)_y = \ddot{y}_C + \left(xB_i \quad yB_i\right) \cdot \Upsilon_4 \quad (1126)$$

avec $\Upsilon_4$ défini en Annexe 1 par l'expression (1126') et avec les matrices (1126") définies en Annexe 1.

- 

$$\left(\frac{d^2\overrightarrow{O_iB_i}}{dt^2}\right)_z = \ddot{z}_C + \left(xB_i \quad yB_i\right) \cdot \Upsilon_5 \quad (1127)$$

avec $\Upsilon_5$ défini en Annexe 2 par l'expression (1127') et avec les matrices (1127") définies en Annexe 2.

On peut ensuite mettre l'accélération $\ddot{l}_i$ sous la forme suivante :

$$\ddot{l}_i = h(\ddot{\varphi}, \ddot{\theta}, \ddot{\psi}, \ddot{x}, \ddot{y}, \ddot{z}) \qquad (1128)$$

$$\ddot{l}_i = A_1 \cdot \ddot{\varphi} + A_2 \cdot \ddot{\theta} + A_3 \cdot \ddot{\psi} + A_4 \cdot \ddot{x} + A_5 \cdot \ddot{y} + A_6 \cdot \ddot{z} + ct \qquad (1129)$$

avec :

- $$A_1 = {}^t\begin{pmatrix} 0 \\ B_{yx\ddot\varphi} \cdot xB_i + B_{yy\ddot\varphi} \cdot yB_i \\ B_{zx\ddot\varphi} \cdot xB_i + B_{zy\ddot\varphi} \cdot yB_i \end{pmatrix} \cdot \frac{\overrightarrow{O_iB_i}}{l_i} \quad ;$$

- $$A_2 = {}^t\begin{pmatrix} -\sin\theta \cdot \cos\psi \cdot xB_i - \sin\theta \cdot \sin\psi \cdot yB_i \\ B_{yx\ddot\theta} \cdot xB_i + B_{yy\ddot\theta} \cdot yB_i \\ B_{zx\ddot\theta} \cdot xB_i + B_{zy\ddot\theta} \cdot yB_i \end{pmatrix} \cdot \frac{\overrightarrow{O_iB_i}}{l_i} \quad ;$$

- $$A_3 = {}^t\begin{pmatrix} -\cos\theta \cdot \sin\psi \cdot xB_i + \cos\theta \cdot \cos\psi \cdot yB_i \\ B_{yx\ddot\psi} \cdot xB_i + B_{yy\ddot\psi} \cdot yB_i \\ B_{zx\ddot\psi} \cdot xB_i + B_{zy\ddot\psi} \cdot yB_i \end{pmatrix} \cdot \frac{\overrightarrow{O_iB_i}}{l_i} \quad ;$$

- $$A_4 = {}^t\begin{pmatrix} 1 \\ 0 \\ 0 \end{pmatrix} \cdot \frac{\overrightarrow{O_iB_i}}{l_i} \quad ;$$

- $$A_5 = {}^t\begin{pmatrix} 0 \\ 1 \\ 0 \end{pmatrix} \cdot \frac{\overrightarrow{O_iB_i}}{l_i} \quad ;$$

- $$A_6 = {}^t\begin{pmatrix} 0 \\ 0 \\ 1 \end{pmatrix} \cdot \frac{\overrightarrow{O_iB_i}}{l_i} \quad ;$$

- $ct = \ddot{l}_i - (A_1 \cdot \ddot\varphi + A_2 \cdot \ddot\theta + A_3 \cdot \ddot\psi + A_4 \cdot \ddot x + A_5 \cdot \ddot y + A_6 \cdot \ddot z).$

$$ct = \ddot{l}_i - \left( A_1 \cdot \ddot\varphi + A_2 \cdot \ddot\theta + A_3 \cdot \ddot\psi + A_4 \cdot \ddot x + A_5 \cdot \ddot y + A_6 \cdot \ddot z \right).$$

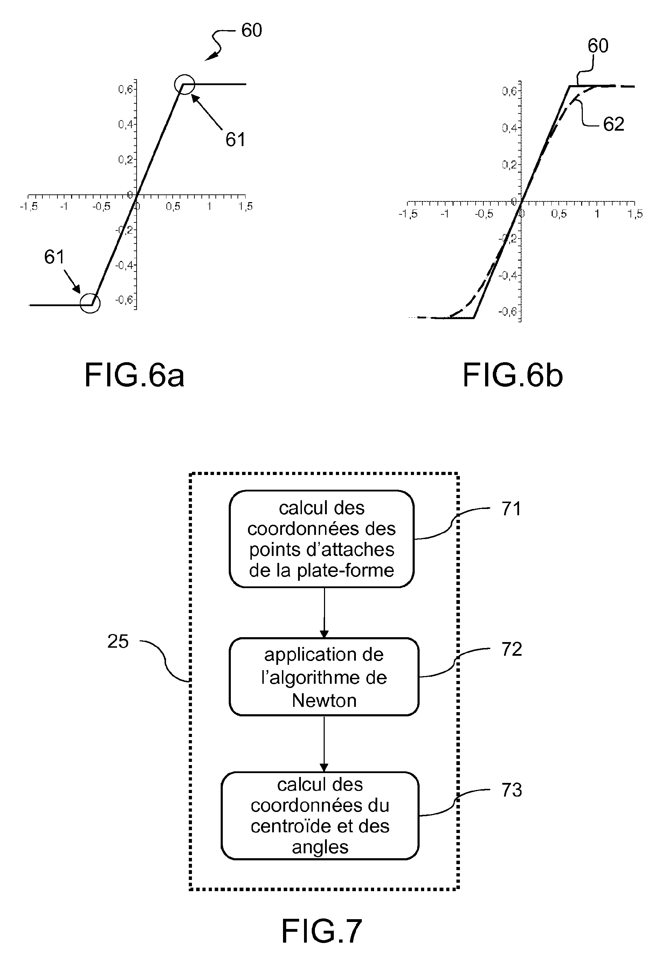

Les figures 6a et 6b représentent des fonctions de mise à l'échelle des élongations des vérins calculées en fonction de la longueur des vérins nécessaire pour appliquer la commande optimale.
On cherche une fonction de la forme suivante :

$$scaling : \mathbf{R}^+ \rightarrow \left[ l_{\min}, l_{\max} \right]$$

Avec :

$$: scaling(l) = \begin{cases} \geq l_{\min}, \forall l \leq l_{\min} \\ = l \quad, \forall l \in \left[ l_{\min}, l_{\max} \right] \\ \leq l_{\max}, \forall l \geq l_{\max} \\ \left( \dfrac{dscaling}{dl} \right)_{\substack{l=l_{\min} \\ l=l_{\max}}} = 0 \end{cases} \quad (1000)$$

A cette fin, on définit dans un premier temps une élongation des vérins $E$ telle que :

$$E = l - \left( \frac{l_{\max} + l_{\min}}{2} \right) \quad (1130)$$

avec :

- $l$ : la longueur d'un vérin ;
- $l_{\min}$ : la longueur minimale d'un vérin ;
- $l_{\max}$ : la longueur maximale d'un vérin.

Le système (1000) devient alors :

*scaling* :

$$\mathbf{R} \rightarrow \left[ -E_{\max}, E_{\max} \right]$$

Avec :

$$scaling(E) = \begin{cases} \geq -E_{\max}, \forall E \leq -E_{\max} \\ = \quad E \quad, \forall E \in \left[ -E_{\max}, E_{\max} \right] \\ \leq \quad E_{\max}, \forall E \geq E_{\max} \\ \left( \dfrac{dscaling}{dE} \right)_{\substack{E=-E_{\max} \\ E=E_{\max}}} = 0 \end{cases} \quad (1131)$$

Pour retrouver la fonction *scaling* ($l$) à partir de la fonction *scaling* ($E$), il faut ajouter une différence correspondant à la longueur à mi-course des vérins. La fonction *scaling* ($E$) recherchée correspond par exemple à une première fonction recherchée 60, représentée sur la figure 6a. Des points anguleux 61 de la fonction recherchée 60 sont ensuite remplacés par des raccords continus, tels que représentés sur la figure 6b. On obtient ainsi une deuxième fonction de mise à l'échelle des élongations 62. La fonction *scaling* ($E$) recherchée est par exemple une fonction impaire, de type exponentielle, dont un maximum est $E_{\max}$. $E_{\max}$ peut être mis à une valeur constante.
Par exemple la fonction suivante peut être utilisée :

$$scaling\left(E\right) = \begin{cases} -E_{max} & \text{si } E \leq -E_{max} \cdot \sqrt{e} \\ E_{max} & \text{si } E \geq E_{max} \cdot \sqrt{e} \\ E \cdot e^{\left(\frac{-E^2}{2 \cdot e \cdot E_{max}^2}\right)} & \text{sinon} \end{cases} \quad (1132)$$

On vérifie ensuite que la fonction proposée remplie les contraintes imposées par la géométrie de la plate-forme mobile. On se place, à cette fin, dans un intervalle [-$E_{max}$, $E_{max}$] :

$$scaling\left(E\right) = E \cdot e^{\left(\frac{-E^2}{2 \cdot e \cdot E_{max}^2}\right)} \Rightarrow \frac{dscaling}{dE} = e^{\left(\frac{-E^2}{2 \cdot e \cdot E_{max}^2}\right)} \cdot \left(1 - \frac{E^2}{e \cdot E_{max}^2}\right) \quad (1133)$$

On en déduit :

$$\begin{cases} \left(\dfrac{dscaling}{dE}\right)_{E=\pm E_{max} \cdot \sqrt{e}} = 0 \\ scaling\left(-E_{max} \cdot \sqrt{e}\right) = -E_{max} \\ scaling\left(E_{max} \cdot \sqrt{e}\right) = E_{max} \end{cases} \quad (1134)$$

La fonction *scaling* (*E*) définie par la relation (1132) respecte donc bien les contraintes imposées décrites par la relation (1131).

La fonction *scaling* (*E*) permet également de borner la vitesse en changeant les paramètres :

$$scaling\left(v\right) = \begin{cases} -v_{max} & \text{si } v \leq -v_{max} \cdot \sqrt{e} \\ v_{max} & \text{si } v \geq v_{max} \cdot \sqrt{e} \\ v \cdot e^{\left(\frac{-v^2}{2 \cdot e \cdot v_{max}^2}\right)} & \text{sinon} \end{cases} \quad (1135)$$

Les longueurs peuvent être bornées en ajoutant une différence correspondant à une longueur à mi-course des vérins, pour changer les longueurs en élongations :

$$scaling\left(l\right) = \begin{cases} l_{\min} \ \ \text{si} \ l \leq \left(\dfrac{l_{\max}+l_{\min}}{2}\right) - \left(\dfrac{l_{\max}-l_{\min}}{2}\right) \cdot \sqrt{e} \\[2em] l_{\max} \ \ \text{si} \ l \geq \left(\dfrac{l_{\max}+l_{\min}}{2}\right) + \left(\dfrac{l_{\max}-l_{\min}}{2}\right) \cdot \sqrt{e} \\[2em] \dfrac{l_{\max}+l_{\min}}{2} + \left(l - \dfrac{l_{\max}-l_{\min}}{2}\right) \cdot e^{\left( \frac{-\left(\frac{l-l_{\min}}{2}\right)^2}{2 \cdot e \cdot \left(\frac{l_{\max}-l_{\min}}{2}\right)^2_{\max}} \right)} \ \text{sinon} \end{cases} \qquad (1136)$$

La figure 7 représente plusieurs étapes possibles de définition des paramètres pour l'étape de calcul de la cinématique inverse 25, représentée sur la figure 2. Il s'agit, lors de l'étape 25 de calcul de la cinématique inverse, de trouver six paramètres ($\varphi$ $\theta$ $\psi$ $x$ $y$ $z$) déterminant la position de la plate-forme, en fonction des longueurs de vérins calculées au cours de l'étape de mise à l'échelle 24.

Une première étape 71 du calcul de cinématique inverse 25 est une étape de calcul des coordonnées des points d'attaches de la plate-forme dans un repère relatif au sol. Les coordonnées des points d'attache de la plate-forme mobile dans le repère sol ont, par exemple, pour indice "ms". Les coordonnées des points d'attache de la base de la plate-forme dans le repère sol ont, par exemple, pour indice "bs". Prenons trois points d'attache au sol pour faire une base de la plate-forme. Par exemple, on peut choisir un premier point $O_1$, un deuxième point $O_3$ et un troisième point $O_5$ avec comme point origine le premier point $O_1$. Des coordonnées $x_{ms_{2i}}$, $y_{ms_{2i}}$, $z_{ms_{2i}}$ des autres points de la base peuvent s'exprimer en fonction des coordonnées des points choisis $O_1$, $O_3$, $O_5$, l'indice « 1 » correspondant au premier point $O_1$, l'indice « 3 » correspondant au deuxième point $O_3$, l'indice « 5 » correspondant au troisième point $O_5$ :

$$\forall i \in \left[1;3\right] \begin{cases} x_{ms_{2i}} - x_{ms_1} = \lambda_{2i}\left(x_{ms_3} - x_{ms_1}\right) + \mu_{2i}\left(x_{ms_5} - x_{ms_1}\right) \\[0.5em] y_{ms_{2i}} - y_{ms_1} = \lambda_{2i}\left(y_{ms_3} - y_{ms_1}\right) + \mu_{2i}\left(y_{ms_5} - y_{ms_1}\right) \\[0.5em] z_{ms_{2i}} - z_{ms_1} = \lambda_{2i}\left(z_{ms_3} - z_{ms_1}\right) + \mu_{2i}\left(z_{ms_5} - z_{ms_1}\right) \end{cases} \ (1137)$$

Le système (1137) est vérifié par tous les points de la plate-forme quel que soit le repère dans lequel sont écrites les coordonnées ($x_{ms_1}$, $y_{ms_1}$, $z_{ms_1}$), ($x_{ms_3}$, $y_{ms_3}$, $z_{ms_3}$), ($x_{ms_5}$, $y_{ms_5}$, $z_{ms_5}$) des premier, deuxième, troisième points $O_1$, $O_3$, $O_5$. Ceci est en particulier vérifié pour les coordonnées des points dans le repère lié à la plate-forme mobile définis par la relation (1107). Comme tous les points de la plate-forme mobile ont la même côte selon un axe z perpendiculaire au plan de la plate-forme, la troisième équation du système (1137) n'apporte aucun renseignement supplémentaire. Les systèmes à résoudre sont donc les suivants :

$$\forall i \in \left[1;3\right] \begin{cases} x_{ms_{2i}} - x_{ms_1} = \lambda_{2i}\left(x_{ms_3} - x_{ms_1}\right) + \mu_{2i}\left(x_{ms_5} - x_{ms_1}\right) \\[0.5em] y_{ms_{2i}} - y_{ms_1} = \lambda_{2i}\left(y_{ms_3} - y_{ms_1}\right) + \mu_{2i}\left(y_{ms_5} - y_{ms_1}\right) \end{cases} \ (1138)$$

Les systèmes (1138) sont des systèmes linéaires de deux équations à deux inconnues. En utilisant la méthode de Cramer pour résoudre les systèmes (1138) on obtient alors les valeurs de ($\lambda_{2i}$ $\mu_{2i}$) $\forall i \in \square 1;3\square$.

Une deuxième étape 72 du calcul de cinématique inverse 25 est l'application de manière itérative de l'algorithme de Newton afin de calculer les coordonnées de tous les points d'attache des vérins sur la plate-forme mobile dans le repère lié au sol.

Dans un premier temps, une expression telle que décrite ci-dessous peut exprimer le fait que les distances $D_1$, $D_2$, $D_3$ entre les points de la plate-forme mobile $B_1$, $B_3$, $B_5$ :

$$\begin{cases} D_1 = \left(x_{ms_3} - x_{ms_1}\right)^2 + \left(y_{ms_3} - y_{ms_1}\right)^2 \\ D_2 = \left(x_{ms_5} - x_{ms_1}\right)^2 + \left(y_{ms_5} - y_{ms_1}\right)^2 \\ D_3 = \left(x_{ms_5} - x_{ms_3}\right)^2 + \left(y_{ms_5} - y_{ms_3}\right)^2 \end{cases} \qquad (1139)$$

Les coordonnées dans le repère mobile, telles que définies dans (1107), peuvent être utilisées pour calculer $D_1, D_2, D_3$. De plus :

$$\forall i \in [1;6] : l_i^2 = \left(xms_i - xmb_i\right)^2 + \left(yms_i - ymb_i\right)^2 + \left(zms_i - zmb_i\right)^2 \qquad (1140)$$

avec $l_i$ représentant les longueurs de vérins de l'itération courante.
En combinant les relations (1139) et (1140), on obtient le système suivant :

$$F = \begin{cases} \forall i \in [1;6] : \left(xms_i - xmb_i\right)^2 + \left(yms_i - ymb_i\right)^2 + \left(zms_i - zmb_i\right)^2 - l_i^2 \\ \left(xms_3 - xms_1\right)^2 + \left(yms_3 - yms_1\right)^2 - D_1 \\ \left(xms_5 - xms_1\right)^2 + \left(yms_5 - yms_1\right)^2 - D_2 \\ \left(xms_5 - xms_3\right)^2 + \left(yms_5 - yms_3\right)^2 - D_3 \end{cases} \qquad (1141)$$

Ensuite, en utilisant les relations (1138), on obtient la relation suivante :

$$F = F\left(X\right) \qquad (1142)$$

avec

$$X = \left(x_{ms_1} \quad x_{ms_3} \quad x_{ms_5} \quad y_{ms_1} \quad y_{ms_3} \quad y_{ms_5} \quad z_{ms_1} \quad z_{ms_3} \quad z_{ms_5}\right)$$

Ensuite, en se basant sur la relation suivante :

$$F\left(X + \Delta_X\right) = F\left(X\right) + \Delta_X \cdot F'\left(X\right) \qquad (1143)$$

avec

$$F'\left(X\right) = jacobien\left(F\right)$$

De la relation (1143), est déduite la relation suivante :

$$\Delta_X = F'^{-1}\left(X\right) \cdot \left(F\left(X + \Delta_X\right) - F\left(X\right)\right) \qquad (1144)$$

On cherche $\Delta_X / F(X + \Delta_X) = 0$, la relation (1144) devient alors:

$$\Delta_X = F'^{-1}(X) \cdot (-F(X)) \qquad (1145)$$

En utilisant la relation (1138), $F'(X)$ peut s'exprimer de la façon définie par l'expression (1146) décrite en Annexe 2.

La variable $X$ peut être initialisée avec des valeurs issues de l'itération précédente. Par exemple, des outils de résolution automatisé de systèmes d'équations peuvent être utilisés pour résoudre le système précédent et obtenir une valeur de $\Delta_X$. Les itérations effectuées en appliquant l'algorithme de Newton peuvent être arrêtées lorsque l'on a max($|\Delta_X| \leq 10^{-7}$, sinon, on peut poser $X = X + \Delta_X$ et relancer une nouvelle itération de l'algorithme de Newton. Un nombre maximum d'itérations peut être fixé.

Une fois cette étape effectuée, en utilisant les relations (1138), on obtient les coordonnées de tous les points d'attache des vérins sur la plate-forme mobile dans le repère lié au sol.

Une troisième étape 73 du calcul de cinématique inverse 25 est une étape de calcul des coordonnées du centroïde de la plate-forme mobile ainsi que des angles de déplacement de la plate-forme mobile.

Dans un premier temps, on calcule les coordonnées du centre de gravité de la plate-forme :

$$G = \frac{1}{6} \cdot \begin{pmatrix} \sum_{i=1}^{6} xms_i \\ \sum_{i=1}^{6} yms_i \\ \sum_{i=1}^{6} zms_i \end{pmatrix} \quad (1147)$$

On peut calculer les coordonnées des vecteurs $\overrightarrow{GB_i}$ qui relient le centre de gravité aux différents points d'attache de la partie mobile de la plate-forme On peut alors créer la base suivante :

$$\begin{vmatrix} Ems_1 = \dfrac{\overrightarrow{GB_1} + \overrightarrow{GB_2}}{2 \cdot xB_1} \\[2ex] Ems_2 = \dfrac{\overrightarrow{GB_1} - \overrightarrow{GB_2}}{2 \cdot yB_1} \\[2ex] Ems_3 = Ems_1 \wedge Ems_2 \end{vmatrix} \quad (1148)$$

La base (1148) correspond, à un instant $t = 0$, à la base canonique du repère lié au sol. En utilisant la relation suivante, qui lie le repère fixe et le repère mobile :

$$\begin{bmatrix} Ems_1 \\ Ems_2 \\ Ems_3 \end{bmatrix} = \begin{bmatrix} T_{mob-fix} \end{bmatrix} \cdot \begin{bmatrix} Emm_1 \\ Emm_2 \\ Emm_3 \end{bmatrix} \quad (1149)$$

avec : $\begin{cases} Emm_1 = \begin{bmatrix} 1 & 0 & 0 \end{bmatrix} \\ Emm_2 = \begin{bmatrix} 0 & 1 & 0 \end{bmatrix} \\ Emm_3 = \begin{bmatrix} 0 & 0 & 1 \end{bmatrix} \end{cases}$ et $T_{mob-fix}$ définie par l'expression (1007), on en déduit :

$$\begin{cases} Ems_2(1)/Ems_1(1) = \tan(\psi) \\ Ems_3(1) = -\sin(\theta) \\ Ems_3(2) = \sin(\varphi)\cdot\cos(\theta) \end{cases} \Leftrightarrow \begin{cases} \psi = \tan^{-1}\left(Ems_2(1)/Ems_1(1)\right) \\ \theta = \sin^{-1}\left(-Ems_3(1)\right) \\ \varphi = \sin^{-1}\left(Ems_3(2)/\cos(\theta)\right) \end{cases} \quad (1150)$$

On a donc bien retrouvé les coordonnées ainsi que les angles ($\varphi\ \theta\ \psi\ x\ y\ z$) associés au centroïde de la plate-forme mobile. En dérivant deux fois les coordonnées ($\varphi\ \theta\ \psi\ x\ y\ z$) on obtient la commande d'accélération à appliquer par la plate-forme mobile.

Le procédé de calcul de commande d'accélération selon l'invention permet avantageusement de reproduire de manière réaliste des accélérations ressenties par le pilote ou le conducteur d'un véhicule dans un simulateur. Elle permet également d'exploiter au maximum l'intégralité des ressources dynamiques du système de mouvement tout en évitant d'atteindre des butées de fin de course des vérins. Ceci permet avantageusement d'augmenter la durée de vie des vérins et plus généralement des plate-formes mobiles de simulation. Avantageusement, le procédé selon l'invention permet de reproduire de manière réaliste des situations extrêmes dans lesquelles les vérins de la plate-forme ont une configuration dissymétrique, par exemple dans le cas de décollages manqués ou suite à un freinage violent.

Les calculs de cinématique directe 23 et inverse 25 dépendent uniquement de la géométrie de la plate-forme de simulation utilisée. Ces calculs peuvent donc avantageusement être adaptés à n'importe quel simulateur avec mouvement sans changer l'architecture fonctionnelle 30, 31 de calcul de la commande d'accélération. De plus les calculs effectués par le procédé selon l'invention sont des calculs exacts, c'est à dire ne nécessitant pas d'approximation. Ceci permet avantageusement de ne pas introduire d'effets de bord qui pourraient nuire à la stabilité des résultats produits par le procédé selon l'invention.

Le procédé selon l'invention permet donc avantageusement d'améliorer l'entraînement des pilotes de véhicules en les confrontant de manière réaliste à des situations extrêmes. Les pilotes de véhicules ainsi entraînés sont donc plus aptes à réagir correctement face à des situations dangereuses, ce qui améliore leur sécurité et évite des dommages sur les véhicules.

Le procédé de calcul de la commande optimale selon l'invention permet en outre un calcul simple des accélérations, des contraintes liées à la plate-forme étant prises en compte après le calcul de la commande optimale générée par le simulateur de mouvement du véhicule.

## Revendications

**1.** Procédé (20) de calcul de commandes de mouvements d'une plate forme mobile d'un simulateur de véhicule (6), ledit procédé (20) utilisant en entrée des accélérations (2) calculées par un logiciel de simulation (1) de comportement du véhicule,
**caractérisé en ce qu'**il comporte au moins les étapes suivantes :

• un premier calcul (22) de commandes d'accélérations à appliquer par la plate-forme, filtrant les accélérations calculées à l'aide d'un filtre construit d'après un modèle mathématique de perception humaine d'un mouvement ;
• un deuxième calcul (23) de positions successives de la plate-forme en fonction des commandes d'accélération filtrées, calculées au cours du premier calcul (22) ;
• une mise à l'échelle (24) des positions successives de la plate-forme, calculées au cours du deuxième calcul (23), en fonction de limitations physiques de la plate-forme ;
• un troisième calcul (25) des commandes d'accélérations à appliquer par la plate-forme, en fonction des positions successives de la plate-forme mises à l'échelle.

**2.** Procédé selon la revendication 1, **caractérisé en ce que** les positions de la plate-forme (6) sont définies par les positions du centre géométrique de la plate-forme (6) et par les longueurs des vérins actionnant la plate-forme (6).

**3.** Procédé selon la revendication 2, **caractérisé en ce que** la longueur des vérins est mise à l'échelle par une première fonction de mise à l'échelle *scading* (*l*) telle que :

*scaling* :

$$\mathbf{R}^+ \rightarrow \left[ l_{\min}, l_{\max} \right]$$

Avec :

$$scaling\left(l\right) = \begin{cases} \geq l_{\min}, \forall l \leq l_{\min} \\ = l \quad, \forall l \in \left[l_{\min}, l_{\max}\right] \\ \leq l_{\max}, \forall l \geq l_{\max} \\ \left(\dfrac{dscaling}{dl}\right)_{\substack{l=l_{\min} \\ l=l_{\max}}} = 0 \end{cases} \qquad (1000)$$

où

- *l* représente une longueur d'un vérin;
- $l_{\min}$ représente une longueur minimale physiquement possible à mettre en oeuvre par la plate-forme (6) ;
- $l_{\max}$ représente une longueur maximale physiquement possible à mettre en oeuvre par la plate-forme (6).

**5.** Procédé selon la revendication 1, **caractérisé en ce que** la mise à l'échelle des positions prend en compte des limitations de vitesse d'allongement des vérins de la plate-forme (6).

**6.** Procédé selon la revendication 5, **caractérisé en ce que** la prise en compte des limitations de vitesse d'allongement des vérins utilise une deuxième fonction de mise à l'échelle *scaling$_v$* (*v*) telle que :

*scaling$_v$* :

$$\mathbf{R} \rightarrow \left[ v_{\min}, v_{\max} \right]$$

avec :

$$scaling_v\left(v\right) = \begin{cases} \geq v_{\min}, \forall v \leq v_{\min} \\ = v \quad, \forall v \in \left[v_{\min}, v_{\max}\right] \\ \leq v_{\max}, \forall v \geq v_{\max} \\ \left(\dfrac{dscaling_v}{dv}\right)_{\substack{v=v_{\min} \\ v=v_{\max}}} = 0 \end{cases} \qquad (1002)$$

où

- *v* représente une vitesse d'allongement d'un vérin ;
- $v_{\min}$ représente une vitesse minimale d'allongement physiquement atteignable par les vérins de la plate-forme (6) ;
- $v_{\max}$ représente une vitesse maximale d'allongement physiquement possible par les vérins de la plate-forme (6).

**7.** Procédé selon la revendication 1, **caractérisé en ce que** les accélérations fournies par le logiciel de simulation étant comparées (21) à une valeur seuil en deçà de laquelle les accélérations ne sont plus perçues par un être humain, seules les accélérations supérieures à la valeur seuil donnent une commande à appliquer par la plate-forme mobile.

**8.** Procédé selon la revendication 1, **caractérisé en ce que** le troisième calcul des commandes d'accélérations applique de manière itérative un algorithme de Newton.

**9.** Dispositif de calcul de commandes de mouvements d'une plate-forme mobile (6) pour un simulateur de véhicule comportant :

• un premier bloc (30) de calcul de commandes d'accélération à appliquer par la plate-forme (6) en filtrant des accélérations fournies par un logiciel de simulation de comportement du véhicule, à l'aide d'un filtre construit d'après un modèle mathématique de perception humaine d'un mouvement ;
• un deuxième bloc (31) de calcul de commandes à appliquer par la plate-forme (6) en fonction de limitations physiques de la plate-forme (6).

**10.** Dispositif selon la revendication 9, **caractérisé en ce que** le deuxième bloc (31) comporte :

• un premier module (32) de calcul de positions successives de la plate-formes en fonction des accélérations de commandes à appliquer par la plate-forme ;
• un deuxième module (33) de mise à l'échelle des positions calculées en fonction des limitations physiques de la plate-forme (6) ;
• un troisième module (34) calculant des accélérations (36) à appliquer par la plate-forme en fonction des positions mises à l'échelle.

**11.** Dispositif selon la revendication 10, **caractérisé en ce que** les positions de la plate-forme sont définies par des positions du centre géométrique de la plate-forme et par des longueurs des vérins de la plate-forme (6).

**12.** Dispositif selon la revendication 11, **caractérisé en ce que** la longueur des vérins est mise à l'échelle par une première fonction de mise à l'échelle *scaling*(*l*) telle que :

*scaling* :

$$\mathbf{R}^+ \rightarrow \left[ l_{\min}, l_{\max} \right]$$

Avec :

$$: scaling\left(l\right) = \begin{cases} \geq l_{\min}, \forall l \leq l_{\min} \\ = l \quad, \forall l \in \left[l_{\min}, l_{\max}\right] \\ \leq l_{\max}, \forall l \geq l_{\max} \\ \left(\dfrac{dscaling}{dl}\right)_{\substack{l=l_{\min} \\ l=l_{\max}}} = 0 \end{cases} \qquad (1000)$$

où

• *l* représente une longueur d'un vérin;
• $l_{\min}$ représente une longueur minimale physiquement possible à mettre en oeuvre par la plate-forme (6) ;
• $l_{\max}$ représente une longueur maximale physiquement possible à mettre en oeuvre par la plate-forme (6).

**13.** Dispositif selon la revendication 10, **caractérisé en ce que** la mise à l'échelle des positions prend en compte des limitations de vitesse d'allongement des vérins de la plate-forme.

**14.** Dispositif selon la revendication 13, **caractérisé en ce que** la prise en compte des limitations de vitesse d'allongement des vérins utilise une deuxième fonction de mise à l'échelle *scaling$_v$* (*v*) telle que :

*scaling$_v$* :

$$\mathbf{R} \rightarrow \left[ v_{\min}, v_{\max} \right]$$

avec :

$$scaling_v\left(v\right) = \begin{cases} \geq v_{\min}, \forall v \leq v_{\min} \\ = v \quad, \forall v \in \left[v_{\min}, v_{\max}\right] \\ \leq v_{\max}, \forall v \geq v_{\max} \\ \left(\dfrac{dscaling_v}{dv}\right)_{\substack{v=v_{\min}\\v=v_{\max}}} = 0 \end{cases} \qquad (1002)$$

où

- *v* représente une vitesse d'allongement d'un vérin ;
- $v_{\min}$ représente une vitesse minimale d'allongement physiquement atteignable par les vérins de la plate-forme (6) ;
- $v_{\max}$ représente une vitesse maximale d'allongement physiquement possible par les vérins de la plate-forme (6).

FIG.1

FIG.2

Accélérations
du véhicule — 35

Calcul commande
optimale — 30

31 —

Cinématique
directe — 32

Mise à l'échelle — 33

Cinématique
inverse — 34

Accélérations
de commande — 36

FIG.3

## FIG.4

définition d'une force spécifique réelle — 41

utilisation d'un modèle de système vestibulaire humain — 42

modélisation d'un système global de ressenti de l'accélération — 43

40

construction d'un système d'équations définissant des erreurs — 44

définition d'un critère de minimisation du système d'équations définissant les erreurs — 45

résolution du système d'équations définissant les erreurs — 46

obtention d'un filtre à appliquer à l'accélération fournie par le logiciel de simulation — 47

calcul de longueur des vérins après application de la commande optimale — 51

calcul de vitesse des vérins — 52

calcul de l'accélération des vérins — 53

23

## FIG.5a

## FIG.5b

## FIG.5c

FIG.6a

FIG.6b

FIG.7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

*   **R. Telban ; W. Wu ; F. Cardullo.** Motion Cueing Algorithm Development : Initial investigation and redesign of the algorithms. *NASA/CR-2000-209863,* Mars 2005